(19) Europäisches Patentamt
European Patent Office
Office européen des brevets

(11) **EP 3 003 860 B1**

(12) **FASCICULE DE BREVET EUROPEEN**

(45) Date de publication et mention
de la délivrance du brevet:
**12.04.2017 Bulletin 2017/15**

(21) Numéro de dépôt: **14731691.3**

(22) Date de dépôt: **20.05.2014**

(51) Int Cl.:
*B64G 1/00* *(2006.01)*  *B64G 1/24* *(2006.01)*
*B64G 1/44* *(2006.01)*  *B64G 1/40* *(2006.01)*
*B64G 1/58* *(2006.01)*  *B64G 1/22* *(2006.01)*
*B64G 1/66* *(2006.01)*  *B64G 1/50* *(2006.01)*

(86) Numéro de dépôt international:
**PCT/FR2014/051168**

(87) Numéro de publication internationale:
**WO 2014/195596 (11.12.2014 Gazette 2014/50)**

(54) **VÉHICULE SPATIAL COMPRENANT AU MOINS UN COUPLE DE BRAS PORTEURS MUNI D'UN MODULE CREUX DE MONTAGE ET PROCÉDÉ POUR LA MISE EN OEUVRE D'UN TEL VÉHICULE**

RAUMFAHRZEUG MIT MINDESTENS EINEM PAAR VON TRAGARMEN MIT EINEM HOHLEN MONTAGEMODUL UND VERFAHREN ZUR ANWENDUNG SOLCH EINES FAHRZEUGS

SPACE CRAFT COMPRISING AT LEAST ONE PAIR OF SUPPORTING ARMS, SAID ARM PAIR BEING EQUIPPED WITH A HOLLOW MOUNTING MODULE, AND METHOD FOR EMPLOYING SUCH A CRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2013 FR 1301251**

(43) Date de publication de la demande:
**13.04.2016 Bulletin 2016/15**

(73) Titulaire: **Airbus Defence and Space SAS**
**78130 Les Mureaux (FR)**

(72) Inventeur: **WALKER, Andrew, Nicholas**
**F-31320 Pechbusque (FR)**

(74) Mandataire: **Cabinet Plasseraud**
**66 rue de la Chaussée d'Antin**
**75440 Paris Cedex 09 (FR)**

(56) Documents cités:
WO-A1-2010/096118      GB-A- 2 319 360
US-A- 3 817 477        US-A- 6 102 339
US-A1- 2002 112 417

**Description**

La présente invention concerne les véhicules spatiaux tels que les satellites, et plus précisément des véhicules spatiaux destinés à supporter une pluralité d'équipements et à rester en orbite autour d'une planète.

Un satellite, et plus précisément un satellite géostationnaire de télécommunication, se présente typiquement sous la forme d'un parallélépipède rectangle, sur lequel il est défini une face nord et une face sud, une face est et une face ouest, une face avant et une face arrière. Les faces nord, sud, est et ouest sont nommées ainsi en correspondance avec les points cardinaux de la planète autour de laquelle le satellite est placé. La face avant est celle en direction de la planète, la face arrière est la face opposée.

Le satellite comprend une pluralité d'équipements montés sur ses différentes faces, tels que des antennes, des radiateurs ou encore des tuyères de moteurs. Par conséquent, l'encombrement est un défi majeur dans la conception des satellites et de leurs équipements, la surface extérieure totale limitant le nombre et les dimensions des équipements pouvant être installés.

Plus précisément, chaque équipement connaît des contraintes qui lui sont propres. Par exemple, une antenne ne doit pas avoir un champ de vision qui est obscurci par les autres équipements. Des moteurs, tels que des moteurs à plasma, génèrent un jet de plasma qui risque de détériorer les équipements voisins. Un panneau solaire doit avoir une exposition au Soleil sur la plus grande surface possible.

Ainsi, des positions et des distances minimales doivent être respectées entre les équipements afin de garantir leur bon fonctionnement, de sorte que la surface sur l'extérieur du satellite est rapidement saturée.

Le problème va être explicité plus précisément avec l'exemple des radiateurs, pour des satellites géostationnaires, c'est-à-dire des satellites qui sont fixes par rapport à un point d'une planète.

Un satellite peut comprendre de nombreux équipements qui génèrent, lors de leur fonctionnement, des élévations de température et qui nécessitent donc d'être refroidis. De plus, le satellite dans l'espace reçoit un rayonnement solaire, qui augmente la température des équipements. Ces élévations de température peuvent endommager les équipements, qui doivent donc être refroidis. A cet effet, il peut être prévu de relier thermiquement des surfaces radiatives thermiquement, plus communément appelées radiateurs, aux équipements, lesquels radiateurs ont pour fonction d'évacuer la chaleur vers l'espace froid.

Les radiateurs sont positionnés sur la surface extérieure du satellite de manière à ne pas subir d'élévation de température, c'est-à-dire qu'ils sont, dans la mesure du possible, à l'abri du rayonnement solaire. A cet effet, un radiateur est en général monté sur la face nord ou la face sud du satellite, de sorte que la surface radiative du radiateur, tournée vers l'espace, est posée sur la face nord ou la face sud. En effet, les faces nord et sud du satellite sont les moins exposées au rayonnement solaire, de sorte que la face radiative du radiateur ne reçoit que pas ou peu de rayonnement solaire.

Le document US 6,102,339 (WU et al.) illustre un exemple de satellite dans lequel les faces nord et sud sont recouvertes chacune d'un radiateur.

Cependant, la taille des radiateurs est limitée par la dimension des faces nord et sud. Or, plus la surface radiative est importante, plus la dissipation de chaleur est efficace. Les dimensions des faces nord et sud du satellite sont limitées notamment par le fait que, pour pouvoir être mis en orbite, le satellite est préalablement placé dans un lanceur. Le satellite doit alors être le plus compact possible.

Ainsi, il est connu d'installer des radiateurs déployables, qui sont rabattus lors du lancement du satellite et déployés lorsque le satellite est en orbite. Les documents FR 2 823 182 (ALCATEL), US 5,833,175 (CAPLIN) et WO 03/059740 (ASTRIUM) présentent chacun un exemple de tels radiateurs. La surface radiative déployée est cependant limitée par les autres équipements du satellite, tels que les antennes qui, comme cela a déjà été dit, ne doivent pas être obstruées lorsque les radiateurs sont déployés. De plus, de tels radiateurs ne sont pas totalement à l'abri des rayons solaires. En effet, alors que le satellite demeure en général dans le plan de l'équateur de la planète, les rayons solaires incidents peuvent avoir une inclinaison variable dépendamment de la position de la planète par rapport au Soleil. Par conséquent, des rayons solaires peuvent atteindre les faces nord et sud du satellite, et donc les radiateurs, diminuant leur efficacité.

Des miroirs réfléchissants les rayons du Soleil, connus sous le nom de Optical Solar Reflector (OSR), peuvent être utilisés pour recouvrir les radiateurs, pour diminuer davantage l'augmentation de température due aux rayons du Soleil. Toutefois, de tels miroirs augmentent les coûts de fabrication du satellite. De plus, ils se dégradent avec le temps, n'assurant pas une protection efficace tout au long du fonctionnement du satellite.

Le document US 6,102,339 (WU et al.) précité propose d'installer un dispositif de blocage, monté sur un panneau solaire en rotation sur le satellite pour suivre les rayons solaires. Le dispositif de blocage est alors interposé entre les radiateurs et les rayons solaires dont l'inclinaison par rapport aux faces nord et sud du satellite leur permet d'atteindre les radiateurs.

Toutefois, un tel dispositif de blocage supplémentaire augmente de manière indésirable l'encombrement sur le corps du satellite. Les coûts de fabrication sont également augmentés. De plus, un tel dispositif de blocage doit être plié au lancement, puis déployé une fois que le satellite est en orbite. La cinématique de déploiement du dispositif de blocage, combinée à celle devant être mise au point pour les panneaux solaires et éventuellement les radiateurs, complexifient la conception du satellite.

Le document US 3 817 477 propose un véhicule spatial selon le préambule de la revendication 1.

Il existe donc un besoin pour un nouveau satellite, dans lequel l'encombrement est réduit pour que les équipements ne se gênent pas les uns les autres, sans pour autant complexifier la conception.

Un premier objet de l'invention est de proposer un véhicule spatial dans lequel l'encombrement est diminué.

Un deuxième objet de l'invention est de proposer un véhicule spatial dont les coûts de fabrication ne sont pas augmentés.

Un troisième objet de l'invention est de proposer un véhicule spatial permettant de créer avantageusement une zone à l'abri des rayons solaires.

Un quatrième objet de l'invention est de proposer un véhicule spatial dont la cinématique de déploiement est simple.

L'invention propose alors, selon un premier aspect, un véhicule spatial du type connu par US 3 817 477, et comprenant toutes les mesures techniques du préambule de la revendication 1, et qui se caractérise en ce qu'il comprend des moyens pour commander une rotation héliosynchrone du premier bras autour de l'axe de rotation, le premier dispositif étant apte à être interposé entre le Soleil et le deuxième dispositif tout au long de l'orbite du véhicule, de sorte que le deuxième dispositif est au moins partiellement à l'ombre du premier dispositif tout au long de l'orbite du véhicule.

Ainsi, l'encombrement sur le corps du satellite est fortement diminué, puisque deux dispositifs sont montés en n'utilisant qu'une surface correspondant à la surface occupée par le module de montage. En outre, les dispositifs étant montés sur des bras, et donc éloignés du corps du véhicule, les deux dispositifs n'entrent pas ou peu en interaction avec d'autres équipements du véhicule.

Selon un mode particulier, le véhicule est un satellite géostationnaire, mis en orbite autour d'une planète.

En effet, le véhicule étant un satellite géostationnaire, sa position par rapport à un point de la planète autour de laquelle il est en orbite est identique tout au long de l'orbite. Toutefois, la planète tournant autour du Soleil, la position du satellite par rapport au Soleil change pendant son orbite au cours d'une journée de la planète, de sorte que certaines parties du satellite sont atteintes par les rayons du Soleil à certains moment de la journée tandis que d'autres sont à l'ombre, et inversement à d'autres moments. Or, grâce au module de montage et en commandant une rotation héliosynchrone du premier bras, le premier dispositif peut suivre les rayons du Soleil tout au long de l'orbite du satellite. Ainsi, en interposant le premier dispositif entre le deuxième dispositif et le Soleil, le deuxième dispositif peut être à l'ombre du premier dispositif, c'est-à-dire que les rayons du Soleil ne peuvent pas l'atteindre.

Selon un exemple, le premier dispositif comprend un panneau solaire présentant une face frontale apte à recevoir les rayons du Soleil, tournée à l'opposé du deuxième dispositif et qui est munie de cellules solaires, le module annulaire de montage comprenant alors des moyens pour établir une liaison électrique avec le corps.

Ainsi, la face frontale du panneau solaire peut avantageusement suivre le Soleil tout au long du déplacement du véhicule suivant son orbite autour de la planète, pour profiter d'un ensoleillement maximal.

Par exemple, le premier dispositif peut comprendre, en plus ou à la place du panneau solaire, un panneau bloquant les rayons du Soleil, le panneau bloquant étant revêtu d'une couche d'un matériau bloquant les rayons du Soleil, assurant que le deuxième dispositif ne soit pas atteint par des rayons du Soleil.

Selon un exemple, le deuxième dispositif comprend un radiateur, le deuxième bras étant muni de moyens pour établir un transfert de chaleur entre le radiateur et des équipements du véhicule.

Le radiateur doit avantageusement être maintenu à une température la plus faible possible pour assurer une bonne évacuation de la chaleur. Il est donc particulièrement avantageux de bloquer les rayons du Soleil susceptibles de l'atteindre par le premier dispositif, d'autant plus lorsque le premier dispositif est un panneau solaire pour lequel l'ensoleillement maximal est recherché.

Les moyens pour établir un transfert de chaleur entre le radiateur et le corps comprennent par exemple une liaison fluidique pour la circulation d'un fluide caloporteur.

Ainsi, la liaison fluidique peut passer par l'ouverture du module de montage, diminuant l'encombrement sur le corps du véhicule.

De préférence, le radiateur se présente sous la forme d'un panneau présentant deux faces radiatives opposées et comprend une pluralité de caloducs répartis sur les faces radiatives. Les caloducs assurent une bonne répartition de la chaleur sur l'ensemble des faces radiatives, favorisant l'évacuation de la chaleur. En particulier, le radiateur présente deux côtés alternativement plus proches du premier dispositif, lequel peut être chaud, en particulier lorsqu'il s'agit d'un panneau solaire. Un gradient thermique peut alors apparaître entre le côté plus chaud, plus proche du premier dispositif, et le deuxième côté plus éloigné, défavorable à l'évacuation de la chaleur. Les caloducs sont alors répartis d'un côté à l'autre des faces radiatives, évitant l'apparition de ce gradient thermique.

En variante, le deuxième dispositif peut comprendre, en plus ou à la place du radiateur, une antenne. Le premier dispositif est alors transparent aux ondes dont la longueur d'onde correspondant à une des longueurs d'émission et / ou de réception de l'antenne.

L'antenne peut ainsi être éloignée des autres équipements sur le véhicule, susceptible d'obscurcir son champ d'émission et / ou de réception, et en plus être conservée à l'abri des rayons du Soleil qui pourraient la détériorer.

En variante encore, le deuxième dispositif peut comprendre, en plus ou à la place du radiateur et / ou de l'antenne, une tuyère pour un moteur par exemple de type à plasma.

Là encore, la tuyère peut rester à l'abri des rayons du Soleil, qui risquent d'augmenter sa température de manière indésirable. En outre, de manière particulièrement avantageuse, la tuyère est alors éloignée des autres équipements, son jet par exemple de plasma peut alors être dirigé vers l'espace sans qu'aucun équipement ne risque d'être atteint par le jet.

Selon un mode de réalisation, le deuxième bras comprend au moins une portion flexible autour de toute direction perpendiculaire à l'axe de rotation du premier bras, le premier dispositif étant aligné sur l'axe de rotation.

Ainsi, la position du deuxième dispositif peut être modifiée grâce à la flexibilité du deuxième bras lors de la rotation du premier dispositif de manière à conserver une position relative entre le premier dispositif et le deuxième dispositif dans laquelle le premier dispositif est interposé entre le deuxième dispositif et le Soleil.

Selon un autre mode de réalisation, le deuxième bras est rigide, le deuxième dispositif étant aligné sur l'axe de rotation.

Ainsi, la position du deuxième dispositif reste fixe tandis que le premier dispositif pivote autour de l'axe de rotation pour conserver une position relative entre le premier dispositif et le deuxième dispositif dans laquelle le premier dispositif est interposé entre le deuxième dispositif et le Soleil.

Selon un mode de réalisation, le corps présente au moins une face dite de support, et dans lequel le premier bras et le deuxième bras sont articulés en rotation par rapport au corps selon un axe d'articulation perpendiculaire à l'axe rotation du premier bras. Chaque bras peut alors prendre deux positions extrêmes par rapport à la face de support :

- une position déployée, dans laquelle le bras considéré est en saillie sur ladite face de support,
- une position repliée, dans laquelle le bras considéré est ramené sensiblement parallèlement à la face de support.

Ainsi, les bras peuvent avantageusement être mis en position repliée lorsque par exemple le véhicule est un satellite qui doit donc être placé dans un lanceur avant d'être lancé en orbite, afin de diminuer l'encombrement du satellite et faciliter sa mise en place dans le lanceur. Puis, une fois le satellite lancé, les bras peuvent être amenés en position déployée.

Par exemple, lorsque les deux bras sont en position repliée, ils sont superposés l'un sur l'autre, de manière particulièrement peu encombrante.

Selon un mode de réalisation particulièrement avantageux, le deuxième bras peut prendre une position intermédiaire dans laquelle il forme un angle prédéterminé avec la face support. Il est alors particulièrement avantageux que le deuxième dispositif comprenne une tuyère d'un moteur.

De préférence, le véhicule comprend deux couples de bras porteurs, les premiers bras de chacun des couples étant montés en rotation sur le corps autour du même axe de rotation. Un premier couple est par exemple monté sur une première face de support et le deuxième couple est monté sur une deuxième face de support du corps. La première face de support et la deuxième face de support sont opposées l'une à l'autre selon l'axe de rotation des premiers bras.

Selon un deuxième aspect, l'invention propose un procédé pour la mise en oeuvre d'un véhicule autour d'une planète tel que présenté ci-dessus avec les moyens pour commander une rotation héliosynchrone du premier bras, comprenant les opérations suivantes :

- la mise en orbite géostationnaire du véhicule autour de la planète ;

- la mise en une position initiale du premier dispositif par rapport au deuxième dispositif dans laquelle le premier dispositif reçoit les rayons du Soleil, le deuxième dispositif étant au moins partiellement à l'ombre du premier dispositif ;

- la mise en oeuvre des moyens pour commander une rotation héliosynchrone du premier bras, le deuxième dispositif demeurant à l'ombre du premier dispositif tout au long de l'orbite autour de la planète.

D'autres avantages caractéristiques et avantages de l'invention apparaîtront à la lumière de la description faite ci-après, en référence aux figures ci-jointes illustrant divers modes de réalisation de l'invention, et dans lesquelles :

- la figure 1 est une représentation schématique en perspective d'un couple de bras porteurs monté sur une surface support d'un corps d'un véhicule spatial selon un premier mode de réalisation de l'invention, au moyen d'un module de montage ;

EP 3 003 860 B1

- la figure 2a est une vue en coupe transversale d'un exemple du module de montage du mode de réalisation de la figure 1 ;

- la figure 2b est une vue en coupe transversale d'un deuxième exemple du module de montage du mode de réalisation de la figure 1 ;

- la figure 3 est un représentation schématique d'un véhicule spatial de type satellite comprenant deux couples de bras porteurs selon le mode de réalisation des figures 1 et 2, selon un premier montage, le satellite étant en orbite autour d'une planète, quatre positions du satellite, à différents instants, autour de la planète étant représentées sur la même figure,

- la figure 4 est une vue de dessus du satellite de la figure 3 dans huit positions différentes autour de la planète à des instants différents,

- la figure 5 est une vue de côté du satellite dans la position à un instant marqué 00:00 autour de la planète de la figure 3,

- la figure 6 est une vue de côté du satellite dans la position à un instant marqué 06:00 autour de la planète de la figure 3,

- la figure 7 est une représentation schématique similaire à celle de la figure 3, selon un deuxième montage,

- la figure 8 est une vue de dessus du satellite de la figure 7 dans huit positions différentes,

- les figures 9a à 9d sont des représentations schématiques en perspective de quatre positions successives du couple de la figure 1, les bras porteurs étant articulés sur le corps,

- la figure 10 est une vue de côté du satellite selon une troisième variante de réalisation,

- les figures 11a à 11d μsont des représentations similaires à celles des figures 9a à 9d, du satellite de la figure 10 dans lequel les bras porteurs sont articulés sur le corps du véhicule,

- la figure 12 est une vue en coupe transversale de la variante de réalisation de la figure 10,

- la figure 13 est une vue de côté du satellite similaire à celle de la figure 6, selon une variante de réalisation,

- la figure 14 est une vue de côté du satellite similaire à celle de la figure 6 et 13, selon une variante de réalisation,

- la figure 15 est une représentation similaire à celle de la figure 1, selon un deuxième mode de réalisation de l'invention,

- la figure 16 est un représentation schématique d'un véhicule spatial de type satellite comprenant deux couples de bras porteurs selon le mode de réalisation de la figure 15, le satellite étant en orbite autour d'une planète, quatre positions du stellite, différents instants, étant représentées sur la même figure,

- la figure 17 est une vue de dessus du satellite de la figure 16 dans huit positions différentes autour de la planète,

- la figure 18 est une représentation schématique du mouvement d'un dispositif sur le satellite de la figure 16,

- la figure 19 est une vue de côté du satellite des figures 16 et 17, dans la position à un instant marqué 0:00 autour de la planète,

- la figure 20 est une vue similaire à celle de la figure 19, le satellite étant dans la position à un instant marqué 18:00 de la figure 19 autour de la planète,

- les figures 21a à 21e sont des représentations schématiques en perspective illustrant une cinématique de déploiement des bras du deuxième mode de réalisation,

- les figures 22a à 22d sont des représentations schématiques en perspective illustrant une cinématique de déploiement des bras selon une variante,

5

- les figures 23a à 23d sont des représentations schématiques d'un radiateur monté sur un bras porteur dans quatre positions différentes par rapport à un panneau solaire,

- la figure 24 est une vue de face d'un radiateur selon un premier mode de réalisation,

- la figure 25 est une vue de face d'un radiateur selon un deuxième mode de réalisation.

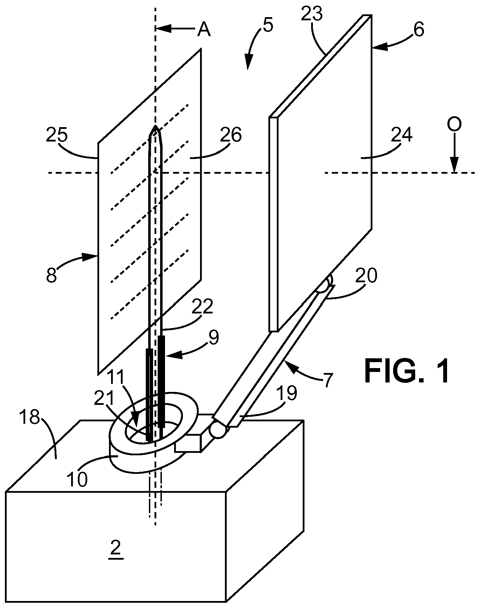

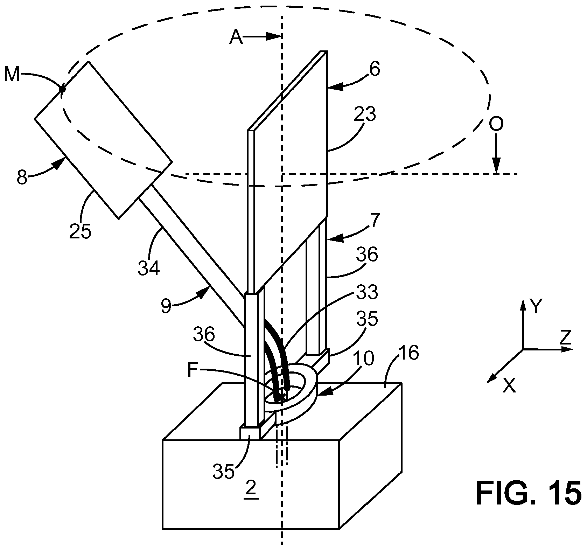

Sur les figures 1 et 15, il est illustré de manière schématique une portion d'un corps **2** d'un véhicule **1** spatial, tel qu'un satellite, apte à être mis en orbite autour d'une planète P, telle qu'une planète de notre système solaire.

Le corps 2 d'un satellite 1 se présente de manière classique sous la forme d'un parallélépipède rectangle. Trois axes **Z**, **Y** et **X** liés au satellite 1 sont destinés à être orientés respectivement vers la planète P autour de laquelle le satellite est placé en orbite, dans une direction nord-sud, et dans une direction est-ouest. Le corps 2 du satellite 1 présente une face nord, une face sud, une face orientée vers la planète P, dénommée face avant, une face opposée à la planète P, dénommée face arrière, et deux faces latérales appelées face est et face ouest. Le satellite 1 peut comprendre en outre des antennes **3** fixées sur la face arrière du corps 2 du satellite 1, mais à distance pour dégager leur lobe d'émission ou de réception, et qui sont orientées en permanence selon l'axe Z, vers la planète PP ou à l'opposé. Une antenne **4** omnidirectionnelle peut également être montée sur la face avant du corps 2 du satellite 1, en direction de la planète.

Le véhicule 1 comprend en outre au moins un couple **5** de bras, appelés bras porteurs car portant chacun au moins un dispositif. Plus précisément, un premier dispositif **6** est monté sur un premier bras **7** porteur et un deuxième dispositif **8** est monté sur le deuxième bras **9** porteur du couple 5. Le premier bras 7 est monté sur le corps 2 du véhicule 1 en rotation autour d'un axe noté **A**. Le deuxième bras 9 est fixé sur le corps 2, c'est-à-dire qu'au moins un point du deuxième bras 9 est fixe par rapport au corps 2 du véhicule 1. Il peut par exemple s'agir d'un unique point de fixation du deuxième bras 9 sur le corps 2 du véhicule.

Le mot « bras » prend ici un sens large, et n'est en rien limitatif quant à la forme ou quant au nombre de pièces composant un bras ni quant à la rigidité. Ainsi, comme il sera vu plus loin, un « bras » peut être une unique pièce rigide, ou comprendre plusieurs sections successives, articulées les unes par rapport aux autres, ou encore comprendre deux branches parallèles côte à côte. Un bras peut également être rigide, c'est-à-dire qu'il ne se déforme pas lors de conditions normales de fonctionnement, ou être flexible.

Par « dispositif », on entend ici aussi bien un seul équipement, par exemple un panneau solaire, un radiateur ou une tuyère, qu'un ensemble d'équipements.

De préférence, les deux dispositifs 6, 8 ne sont pas alignés selon une direction parallèle à l'axe A de rotation. Par exemple, le premier dispositif 6 peut se trouver sur l'axe A de rotation, tandis que le deuxième dispositif 8 est déporté par rapport à l'axe A de rotation. Inversement, le premier dispositif 6 peut être déporté par rapport à l'axe A de rotation, tandis que le deuxième dispositif 8 se trouve sur l'axe A de rotation.

Les deux bras 7, 9 du couple sont en saillie sur une même face du satellite 1, c'est-à-dire qu'ils s'étendent, chacun, dans une direction comprenant au moins une composante perpendiculaire à une même face du satellite 1.

Le couple 5 de bras porteurs comprend en outre un module **10** de montage, creux, en rotation du premier bras 7 sur le corps 2 du véhicule. Le module 10 de montage comprend une ouverture **11**, à travers laquelle l'axe A de rotation et le deuxième bras 9 porteur passent.

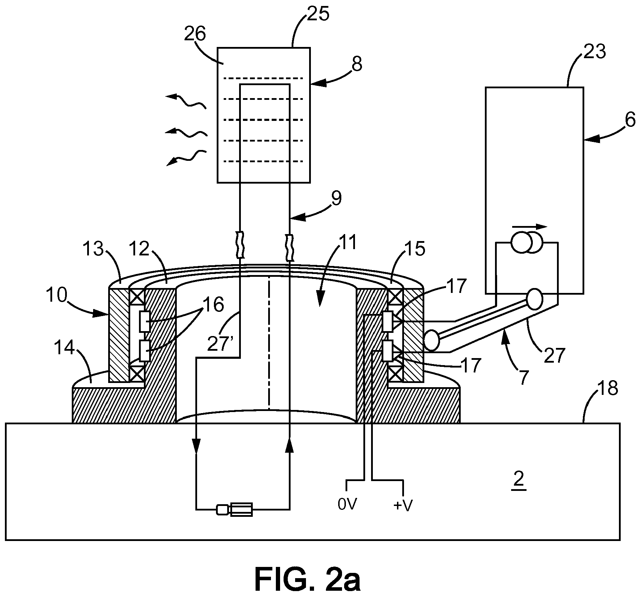

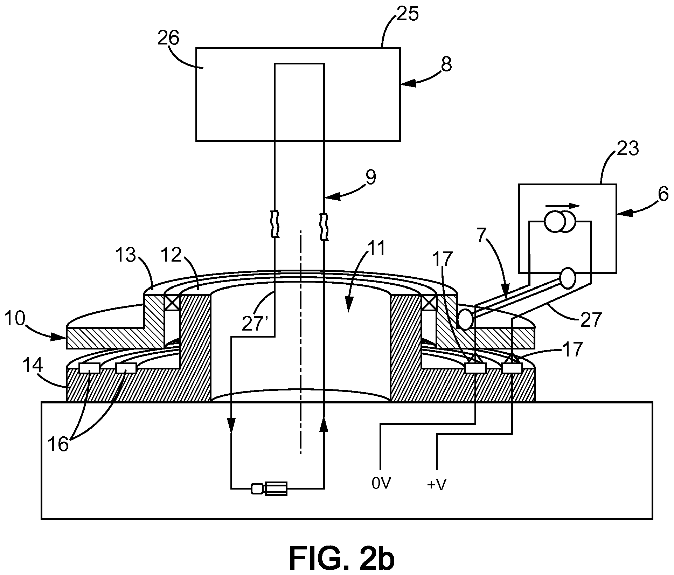

Le module 10 de montage peut se présenter par exemple sous la forme d'une pièce symétrique de révolution autour d'un axe confondu avec l'axe A de rotation, tel qu'un cylindre, ou anneau, comme illustré notamment sur la figure 2a, ou encore sous une forme aplatie, comme illustré notamment sur la figure 2b. L'ouverture 11 est alors sensiblement centrale sur le module 10.

Plus précisément, le module 10 comprend deux parties **12**, **13**, sensiblement annulaires. Une première partie 12 dite fixe présente par exemple une corolle **14** permettant la fixation sur le corps 2. Les moyens de fixation mis en oeuvre entre le corps 2 et la corolle 14 peuvent être de tout type, la visserie étant privilégiée. La partie 12 fixe du module 10 définit l'ouverture 11 du module 10. Une deuxième partie 13 dite rotative présente un diamètre intérieur supérieur au diamètre extérieur de la partie 12 fixe, de sorte que la partie 13 rotative peut être montée sur la partie 12 fixe.

Le module 10 comprend des moyens pour autoriser la rotation de la pièce 13 rotative par rapport à la pièce 12 fixe. Par exemple, des roulements **15** de type roulements à billes sont interposés entre les deux pièces 12, 13, de manière à réduire les frottements entre les deux pièces 12, 13.

Comme il sera explicité plus loin, il peut être nécessaire d'établir une connexion électrique entre le premier dispositif 6 et le corps 2. A cet effet, des moyens de connexion électrique rotatifs peuvent également être interposés entre les deux pièces 12, 13. Par exemple, la pièce 12 fixe est munie de bagues **16** conductrices annulaires, par exemple métalliques, connues en anglais sous le nom de « slip ring », et reliées électriquement au corps 2. De manière complémentaire, la pièce 13 rotative comporte des balais **17**, appelés en anglais « brushes », chaque balai 17 étant en contact avec une bague 16 conductrice. Chaque balai 17 est par ailleurs relié électriquement au premier dispositif 6.

Par exemple, et comme illustré notamment sur la figure 2a, les bagues 16 conductrices sont portées sur une surface externe cylindrique de la pièce 12 fixe et, de manière complémentaire, les balais 17 sont montés sur une surface interne cylindrique de la pièce 13 rotative, en vis-à-vis de la surface externe cylindrique de la pièce 12 fixe. Le module 10 de montage présente alors une forme en anneau. En variante, illustrée notamment sur la figure 2b, les bagues 16 conductrices sont portées sur une surface supérieure de la corolle 14 de la pièce 12 fixe. La pièce 13 rotative comprend également une corolle. Les balais 17 sont alors portés sur une surface inférieure de la corolle de la pièce 13 rotative, en vis-à-vis de la surface supérieure de la corolle 14 de la pièce 12 fixe. Dans cette variante, le module 10 de montage présente une forme aplatie, moins encombrante dans la direction de l'axe A de rotation, que lorsque le module 10 de montage présente la forme en anneau.

Le module 10 de montage est monté sur une face **18** dite de support du corps 2 du satellite 1. Avantageusement, la face 18 de support est confondue avec la face nord ou la face sud du satellite 1, ou elle est formée dans la face nord ou la face sud. Elle est en tout cas de préférence parallèle aux faces nord et sud. De préférence, le satellite comprend deux faces 18a, 18b de support, confondues avec ou formées dans respectivement la face nord et la face sud du satellite. Le satellite comprend alors deux couples, respectivement 5a, 5b de bras porteurs, montés sur les faces, respectivement 18a, 18b de support. Par exemple, le premier bras 6 de chaque couple 5a, 5b est monté en rotation autour du même axe A de rotation. Ainsi, en d'autres termes, les deux couples 5a, 5b sont symétriques l'un par rapport à l'autre selon un plan médian ZX du satellite 1.

Pour chaque couple respectivement 5a, 5b, il peut être prévu que les bras 7, 9 sont montés en saillie sur une face de support respectivement 18a, 18b, au moins lorsque le satellite 1 est placé en orbite et est en fonctionnement.

Ainsi, en n'occupant sur une face, en l'occurrence une face nord ou une face sud, du satellite 1, qu'une surface définie par les dimensions du module 10 de montage, il est possible de monter deux bras 7, 9 porteurs chacun d'un dispositif 6, 8. L'encombrement généré sur le corps 2 du satellite 1 par les deux dispositifs 6, 8 est donc réduit. En particulier, les antennes 3, 4 placées sur les faces avant et arrière du corps 2 ne sont pas gênées pas les dispositifs 6, 8 montés sur le bras 7, 9 porteurs. En outre, les bras 7, 9 étant en saillie sur la face 18 de support, les dispositifs 6, 8 peuvent être montés à distance du corps 2 du satellite, et d'autres équipements peuvent être installés dans la région de l'espace comprise entre la face 18 de support et les dispositifs 6, 8. L'encombrement est donc là encore diminué. Plus particulièrement, en choisissant des longueurs de bras 7, 9 appropriées, le champ de vision des antennes 3, 4 du satellite 1 n'est pas obscurci par les premier et deuxième dispositifs 6, 8.

Selon un mode de réalisation préféré, le satellite 1 est géostationnaire pour une planète **P**, par exemple la Terre, et le premier dispositif 6 a notamment pour rôle de suivre les rayons **R** du Soleil **S** lors du fonctionnement du satellite 1. A cet effet, le véhicule 1 est muni de moyens pour commander une rotation héliosynchrone du premier bras 7 autour de l'axe A de rotation.

Par héliosynchrone, on désigne ici la propriété selon laquelle la rotation du premier bras 7 suit le Soleil malgré la rotation du satellite 1 autour de la Terre. Plus précisément, le satellite 1 étant géostationnaire, il présente toujours la même face, en l'occurrence la face avant dirigée, vers la Terre, et donc il présente alternativement ses faces avant, arrière et est, ouest dirigées vers le Soleil S : son orientation par rapport au Soleil S change au cours de son orbite autour de la Terre. Au contraire, le premier bras 7 pouvant pivoter sur le corps 2 du satellite 1 grâce au module 10 de montage, il présente toujours la même orientation par rapport au Soleil S.

Ainsi, la mise en oeuvre des moyens pour commander une rotation héliosynchrone du premier bras 7 permet au premier dispositif 6 de suivre le Soleil S malgré le déplacement du satellite 1 géostationnaire, dont l'orientation par rapport au Soleil S change. Dès lors, le deuxième dispositif 8 peut être placé de telle manière que le premier dispositif 6 est interposé entre le deuxième dispositif 8 et le Soleil S, de sorte qu'une partie au moins des rayons R du Soleil S dirigés vers le deuxième dispositif 8 ne l'atteignent pas. En d'autres termes, le deuxième dispositif 8 est au moins partiellement, et de préférence complètements, à l'ombre du premier dispositif 6.

A cet effet, par exemple, les deux dispositifs sont mis dans une position initiale dans laquelle le premier dispositif reçoit les rayons R du Soleil S, le deuxième dispositif étant au moins partiellement à l'ombre du premier dispositif, ou encore, en d'autres termes, derrière le premier dispositif 6 par rapport au Soleil S. Puis, les moyens pour commander la rotation héliosynchrone du premier bras 7 assurent que cette position relative entre les deux dispositifs 6, 8 est conservée tout au long de l'orbite du satellite c'est-à-dire que le deuxième dispositif 8 demeure à l'ombre, au moins partiellement, du premier dispositif 6.

Par exemple, à des fins d'explication, il est défini un axe O dit opérationnel, non parallèle à l'axe A de rotation, et par lequel le premier dispositif 6 s'oriente lors de son fonctionnement.

L'axe O opérationnel est défini ici comme étant un axe attaché au premier dispositif 6, passant par au moins un point du premier dispositif 6 et visant au moins un point du Soleil S. L'axe O opérationnel est ainsi un axe par lequel le premier dispositif 6 s'oriente par rapport au Soleil, de sorte que l'orientation du premier dispositif 6 suit le Soleil S tandis que le satellite 1 se déplace. En d'autres termes, le premier bras 7, et donc le premier dispositif 6, pivotent par rapport au corps 2 du satellite 1 de sorte que l'axe O opérationnel pointe en permanence vers le Soleil S.

Le deuxième dispositif 8 est alors au moins partiellement aligné avec l'axe O opérationnel, c'est-à-dire de manière général qu'au moins un point du deuxième dispositif 8 est sur l'axe O opérationnel. Le premier dispositif 6 présentant une certaine extension autour de l'axe O opérationnel, le deuxième dispositif 8 est donc au moins partiellement derrière le premier dispositif 6. Ainsi, le premier dispositif 6 est interposé entre les rayons R du Soleil S et une partie au moins du deuxième dispositif 8, et, le deuxième dispositif 8 est alors à l'ombre du premier dispositif 6, c'est-à-dire que les rayons R du Soleil S qui, en l'absence du premier dispositif 6, auraient atteint le deuxième dispositif 8, sont bloqués par le premier dispositif 8. A cet effet, le premier dispositif 6 est conçu pour bloquer les rayons R du Soleil, par exemple en étant revêtu d'une couche d'un matériau bloquant les rayons R.

Le deuxième dispositif 8 étant protégé des rayons R par le premier dispositif 6, l'augmentation de température du deuxième dispositif 8 est réduite. Ainsi, le premier dispositif 6 peut être tout dispositif bloquant les rayons R du Soleil, et le deuxième dispositif 8 peut être par exemple tout dispositif nécessitant une température contrôlée, la plus basse possible.

De par la configuration du module 10 de montage comprenant l'ouverture 11 et du deuxième bras 9 portant le deuxième dispositif 8 passant par cette ouverture 11, le premier dispositif 6 peut pivoter autour du deuxième dispositif 8. L'alignement entre l'axe O opérationnel du premier dispositif 6 et au moins un point du deuxième dispositif 8, lequel point peut être déplacé au cours du temps, est alors conservé tout au long du déplacement du satellite 1 en orbite. Plus précisément, lorsque le premier dispositif 6 pivote pour que l'axe O opérationnel demeure sensiblement parallèle à la direction des rayons R lors du déplacement du satellite sur son orbite, le deuxième dispositif 8, fixe par rapport au corps 2, demeure toujours à l'ombre du premier dispositif 8.

On va maintenant décrire des modes particuliers de réalisation en référence aux figures annexées.

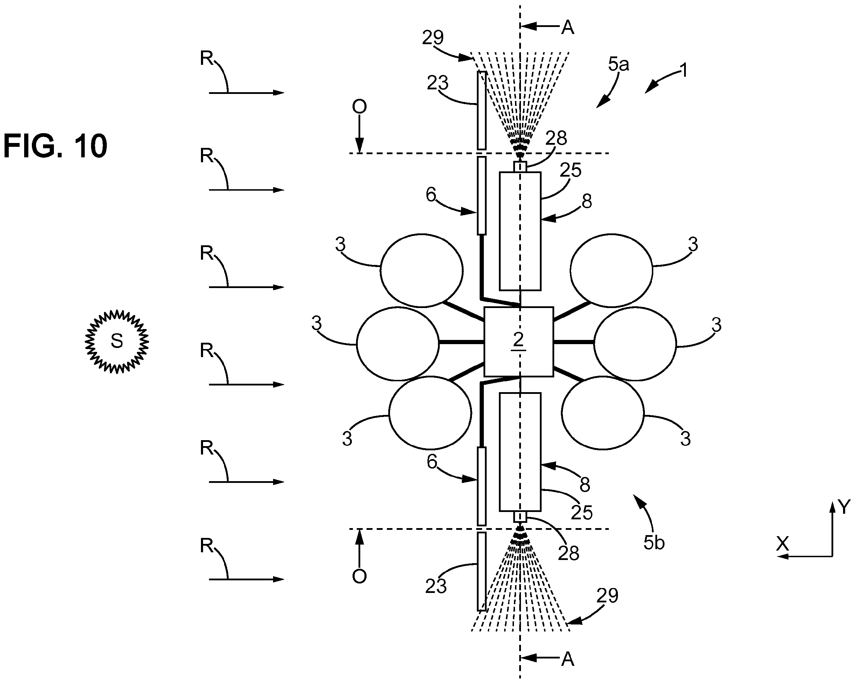

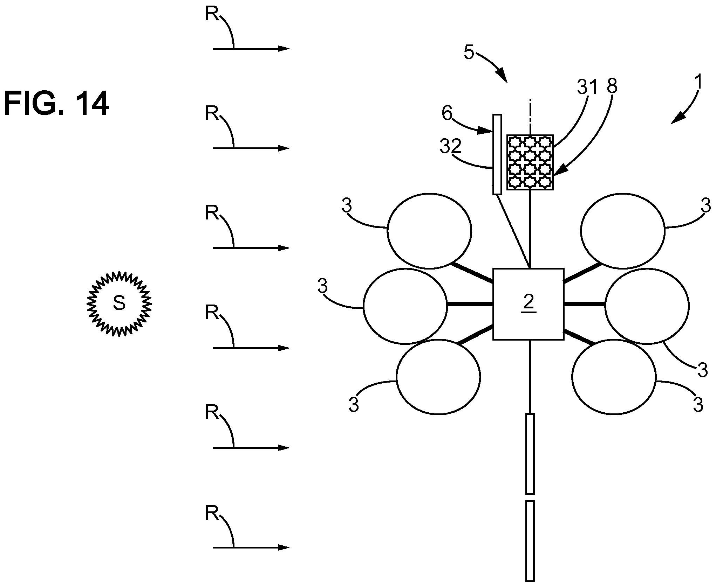

Sur les figures 1 à 14, il est illustré un véhicule 1 muni d'au moins un couple 5 de bras porteurs, et de préférence deux couples 5a, 5b, selon le premier mode de réalisation, et l'axe A de rotation est parallèle à l'axe Y du satellite 1.

Selon ce premier mode de réalisation, pour chaque couple 5a, 5b, le deuxième bras 9 est rigide et est aligné sur l'axe A de rotation, le deuxième dispositif 8 ayant une position fixe par rapport au corps 2. Plus précisément, le deuxième bras 9 et le deuxième dispositif 8 sont compris dans un plan comprenant l'axe A de rotation, et sont fixes par rapport au corps 2 du satellite 1, c'est-à-dire que leur position est figée dans le temps, au tout au moins le temps de l'utilisation du deuxième dispositif 8. Le premier dispositif 6 est déporté par rapport à l'axe A de rotation.

Plus précisément, le premier bras 7 comprend une portion **19** extrême proximale montée sur la périphérie externe de la pièce 13 rotative et une portion **20** extrême distale sur laquelle est montée le premier dispositif 6. En pivotant sur la pièce 12 fixe, la pièce 13 rotative entraîne le premier bras 7 et le premier dispositif 6. Les balais 17 en contact les bagues 15 assurent la connexion électrique entre le corps 2 et le premier dispositif 6. Le deuxième bras 9 passe alors par l'ouverture 11 du module 10. Le deuxième bras 9 présente une portion **21** extrême proximale fixée sur la portion du corps accessible par l'ouverture 11 du module 10 de montage et présente une portion **22** extrême distale munie du deuxième dispositif 8.

En outre, pour que le premier dispositif 6 pivote autour du deuxième dispositif 8, le premier dispositif 6 est plus éloigné de l'axe A de rotation que le deuxième dispositif 8. Ainsi, une rotation du premier dispositif 6 définit un cône ou un cylindre dans lequel le deuxième dispositif 8, dont la position par rapport au corps 2 du satellite 1 est fixe, est compris.

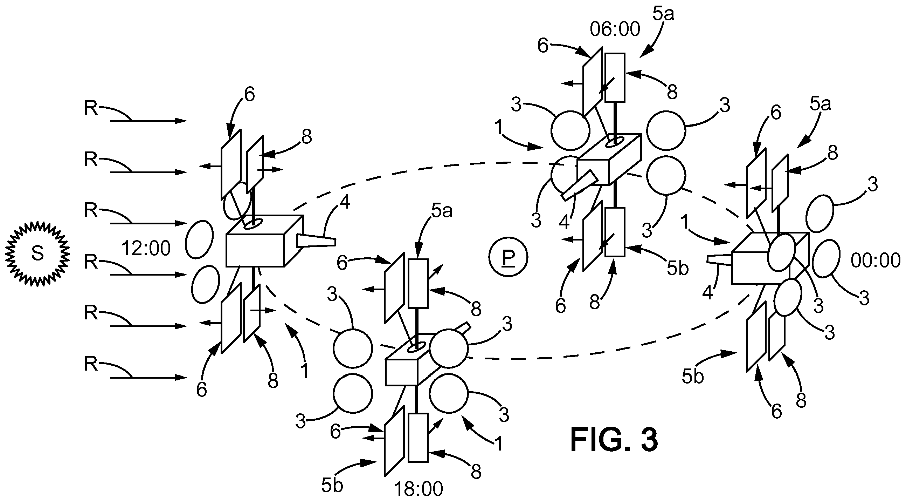

Sur les figures 3 à 5, on a illustré un premier montage du véhicule 1 muni de deux couples 5a, 5b de bras porteurs.

Selon un exemple de réalisation particulier, le premier dispositif 6 comprend un panneau **23** solaire, présentant une face **24** frontale couverte de cellules photovoltaïques sensiblement plane. L'axe O opérationnel peut alors être défini comme étant l'axe perpendiculaire à la face 24 frontale, de sorte que la face 24 frontale fait en permanence face au Soleil S, et est également parallèle à l'axe Y du satellite 1. Le deuxième dispositif 8 comprend par exemple un radiateur **25**, qui se présente sous la forme d'un panneau avec deux faces **26** opposées radiatives, sensiblement planes, perpendiculaires à l'axe Z du satellite 1, et par lesquelles la chaleur peut être évacuée. En d'autres termes, les faces 26 radiatives sont orientées selon les faces avant et arrière du satellite 1. Le radiateur 25 comprend par exemple une pluralité de canaux traversant ses faces 26 radiatives dans lesquels circule un fluide caloporteur. La position relative entre le panneau 23 solaire et le radiateur 25 est telle que la face 24 frontale du panneau 23 solaire est tournée à l'opposé du radiateur 25, le radiateur 25 étant donc en vis-à-vis d'une face arrière du panneau 23 solaire ou, en d'autres termes, derrière le panneau 23 solaire par rapport au Soleil S.

Bien que le panneau solaire 23 puisse être inclinable, on considère dans ce qui suit que la face 24 frontale demeure perpendiculaire à la surface 18 de support du corps du satellite 1, de sorte que l'axe O opérationnel tel que défini ci-dessus est perpendiculaire à l'axe Y du satellite 1. Dans ce cas, il peut être considéré que :

- à l'équinoxe, lorsque les rayons R sont sensiblement parallèle au plan équatorial de la planète P, l'axe O opérationnel est parallèle aux rayons R ;

- au solstice d'été et au solstice d'hiver, lorsque les rayons R sont inclinés par rapport au plan équatorial de la planète P, typiquement d'un angle de plus ou moins 23,5° lorsque la planète P est la Terre, l'axe O opérationnel est incliné d'autant par rapport aux rayons R.

Dans ce cas, le premier bras 7 comprend des moyens **27** de connexion électriques avec, comme cela a été vu précédemment, les balais 17 de la pièce 13 rotative du module 10 de montage ; le deuxième bras 9 comprend des moyens **27'** de liaison fluidique entre le radiateur 25 et le corps 2 du satellite.

Les dimensions relatives entre le radiateur 25 et le panneau 23 solaire sont telles que :

- la largeur **w** des faces 26 radiatives du radiateur 25 est sensiblement égale à la largeur du panneau 23 solaire, et la hauteur du radiateur 25 est inférieure ou égale à la hauteur du panneau 23 solaire,

- la distance **d** entre le panneau 23 solaire et l'axe A de rotation est égale ou très légèrement supérieure à la moitié de la largeur w du radiateur 25,

pour permettre au panneau 23 solaire de se mettre dans les positions indiquées à 06 :00 et à 18 :00, c'est-à-dire lorsque l'axe O opérationnel est parallèle à l'axe X du satellite 1, tout en garantissant que les rayons R du Soleil n'atteignent pas le radiateur 25.

Dans ce qui suit, on a indiqué les positions par des heures, en l'occurrence 00 :00, 06 :00, 12 :00 et 18 :00 comme correspondant aux heures solaires du point de la planète P au-dessus duquel le satellite 1 géostationnaire est placé. Ainsi, par exemple, la position indiquée à l'instant 0 :00 correspond à l'heure solaire 0 :00 (0 heure) du point de la planète P au-dessus duquel le satellite 1 est placé.

Le satellite 1 est placé en orbite autour de la planète **P**, suivant une trajectoire illustrée en traits discontinus sur la figure 3. Le Soleil **S** est situé suffisamment loin pour considérer que ses rayons **R** incidents sur le satellite 1 sont sensiblement parallèles entre eux.

Lorsque le satellite 1 est en orbite autour de la planète P, le panneau 23 solaire conserve sa position relative par rapport au radiateur 25 en pivotant sur le corps 2 du satellite grâce au module 10 de montage. Le radiateur 25, même en restant fixe sur le corps 2 du satellite, ne peut pas être atteint par les rayons R du Soleil S, ou très peu, car le panneau 23 solaire est toujours interposé entre les rayons R et le radiateur 25.

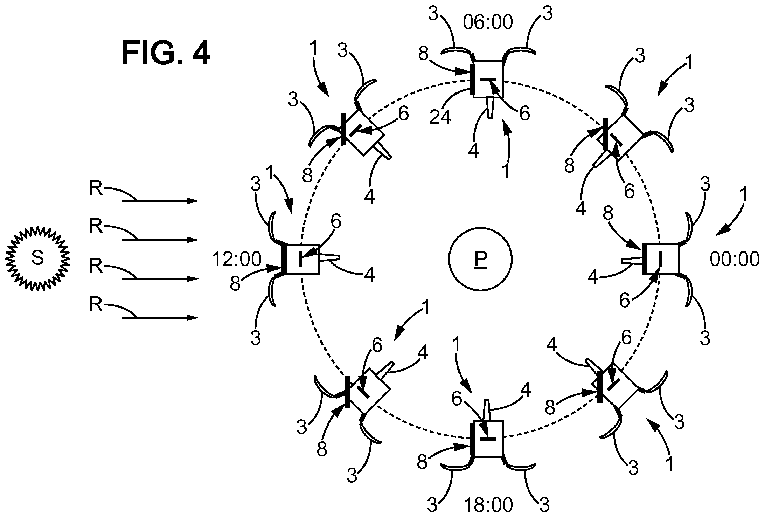

Les figures 3 et 4 illustrent ce qui se passe au cours d'une journée de la planète P considérée, c'est-à-dire d'une rotation sur elle-même, pour quelques positions du satellite 1, à l'équinoxe. Le radiateur 25 est orienté selon l'axe Z du satellite 1, c'est-à-dire que ses faces 26 radiatives sont perpendiculaires à l'axe Z. A des fins de compréhension, sur la figure 3, la face 24 frontale du panneau solaire est repérée par une flèche qui lui perpendiculaire, et une première face 26 radiative du radiateur 25 est également repérée par une flèche qui lui est perpendiculaire.

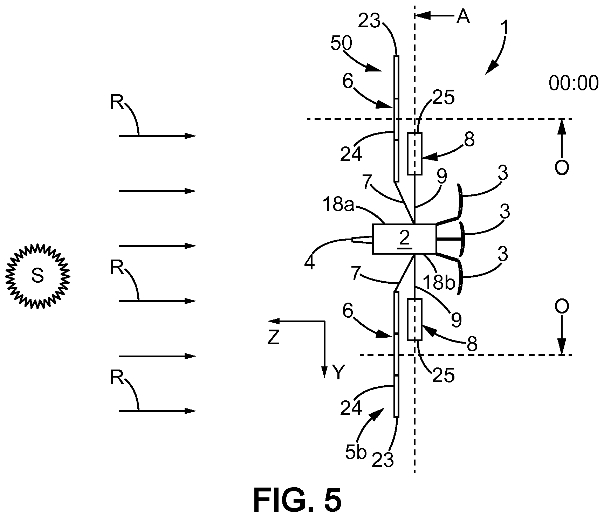

A la position marquée 00 :00, illustrée également sur la figure 5, la face avant du satellite 1 est dirigée vers le Soleil S, ainsi que vers la planète P. L'axe O opérationnel, est parallèle à l'axe Z du satellite 1. Le radiateur 25 est derrière le panneau 23 solaire, donc à l'ombre, le panneau 23 solaire étant interposé entre les rayons R et le radiateur 25. La face 24 frontale du panneau 23 solaire et la première face 26 radiative du radiateur 25 sont parallèles, orientées dans une même direction.

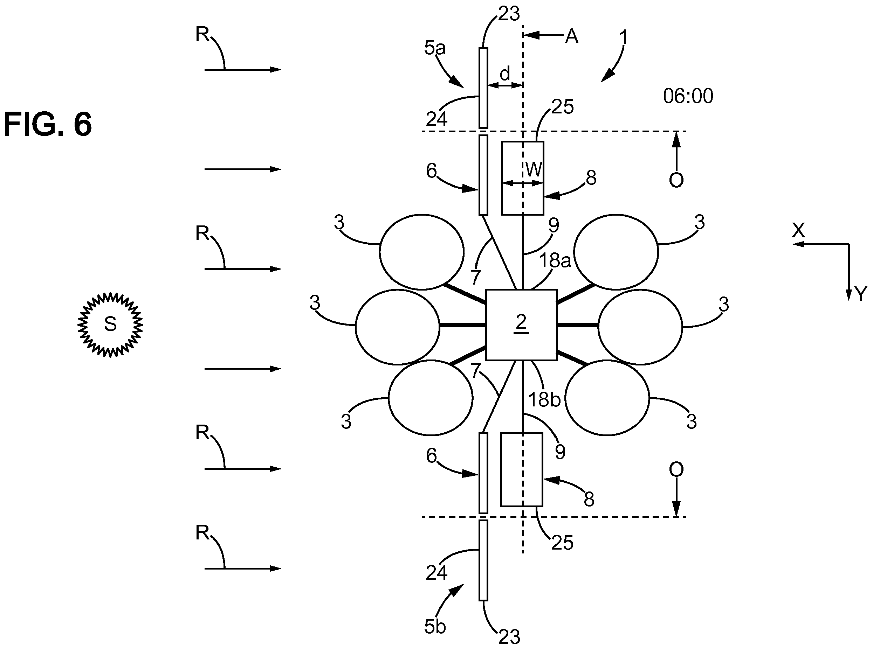

A la position marquée 06 :00, illustrée également sur la figure 6, la face ouest du satellite 1 est dirigée vers la Soleil S. Le panneau 23 solaire a pivoté de 90° et l'axe O opérationnel est parallèle à l'axe X du satellite 1. Les faces 26 radiatives du radiateur 25 sont toujours orientées suivant l'axe Z du satellite 1. Le radiateur 25 est toujours derrière le panneau 23 solaire, à l'ombre. La face 24 frontale du panneau 23 solaire et la première face 26 radiative du radiateur 25 sont perpendiculaires.

Puis, le satellite 1 se déplaçant sur son orbite par rapport au Soleil S pour arriver à la position marquée 12 :00, la face arrière du satellite 1 est dirigée vers le Soleil S. Le panneau 23 solaire a de nouveau pivoté de 90°. La configuration entre le radiateur 25 et le panneau 23 solaire est alors similaire à celle marquée 0 :00. La face 24 frontale du panneau 23 solaire et la première face 26 radiative du radiateur 25 sont de nouveau parallèles, mais orientées dans deux directions opposées.

Enfin, le satellite arrive à la position marquée 18 :00. Le panneau 23 solaire a de nouveau pivoté de 90°. La configuration entre le radiateur 25 et le panneau 23 solaire est alors similaire à celle marquée 06 :00. La face 24 frontale du panneau 23 solaire et la première face 26 radiative du radiateur 25 sont de nouveau perpendiculaires.

La face 24 frontale du panneau 23 solaire est donc en permanence tournée, selon l'axe O opérationnel à l'opposé du radiateur 25. Tout au long de la rotation du panneau 23 solaire, sa face 24 frontale bénéficie d'un ensoleillement maximal, profitable au bon rendement du panneau 23 solaire. Au contraire, le radiateur 25 est dans l'ombre du panneau 23 solaire, tout au long du fonctionnement du satellite 1. En effet, la hauteur et la largeur du panneau 23 solaire sont supérieures à celles du radiateur 25. En outre, en plaçant le radiateur 25 au plus près du panneau 23, c'est-à-dire à la distance d égale ou très légèrement supérieure à la moitié de la largeur w du radiateur 25 pour permettre les positon à 06 :00 et à 18 :00, l'inclinaison de l'orbite de la planète P autour du Soleil S n'a que peut voire pas du tout d'incidence, car les rayons R du Soleil n'atteignent pas le radiateur 25. Il n'est donc plus nécessaire de recouvrir le radiateur 25 de miroirs réfléchissants (OSR).

De plus, les performances du radiateur 25 ainsi monté sont supérieures à celles d'un radiateur de l'état de la technique, comme il va être exposé dans la comparaison ci-dessous de la chaleur totale évacuée par un radiateur sur un satellite géostationnaire de la planète Terre.

En effet, comme cela a déjà été décrit ci-dessus, un satellite se présente de manière classique sous la forme d'un parallélépipède rectangle. Chacune des faces avant, arrière, est et ouest reçoit tour à tour un ensoleillement maximal lorsqu'elle est face au Soleil, intermédiaire lorsqu'elle est de côté puis nul lorsqu'elle est opposée au Soleil, dépendamment de la position du satellite autour de la planète P.

Il est considéré que l'ensemble des équipements du satellite à refroidir forme une charge thermique. Afin de permettre un transfert de chaleur entre la charge thermique et le radiateur, il faut que la température moyenne à la surface du radiateur $T_{surface}$ soit inférieure à celle de la charge thermique $T_{charge}$, c'est-à-dire qu'il faut un gradient thermique $\Delta T$ entre le radiateur et la charge thermique. Toutefois, la charge thermique ne doit pas dépasser une température maximale $T_{maxlimite}$ autorisée au-delà de laquelle les équipements ne fonctionnent plus. Par exemple, si la température maximale $T_{maxlimite}$ autorisée est de 343,15K (Kelvin), et que le gradient thermique $\Delta T$ doit être de 20, la température $T_{surface}$ ne doit pas dépasser 323,15K. Ainsi, la température $T_{surface}$ moyenne à la surface du radiateur doit répondre à la relation suivante :

$$T_{surface} + \Delta T = T_{ch\arg e} \leq T_{\max\lim ite}$$

Selon l'état de la technique, le radiateur est monté contre la face nord ou la face sud, son unique face radiative étant tournée vers l'espace. La face radiative va recevoir un ensoleillement qui varie selon la position de la planète autour du Soleil. En effet, l'orbite de la planète autour du Soleil étant inclinée, par exemple de 23,5° pour la Terre au solstice d'été, il est considéré que la face nord reçoit alors un ensoleillement maximal au solstice d'été et un ensoleillement nul aux équinoxes et au solstice d'hiver. Afin de réduire autant que possible l'absorption du rayonnement solaire, des miroirs (OSR) sont installés sur la face nord, de sorte que l'absorptivité solaire du radiateur est la plus faible possible. En théorie, l'absorptivité des miroirs est nulle. Toutefois, avec le temps, ceux-ci se dégradent et admettent une valeur typique pour l'absorptivité de 0,27.

La puissance rayonnée $P_R$ par le radiateur en considérant qu'il n'absorbe aucun rayonnement est donnée par la loi de Stefan-Boltzmann :

$$P_R = \varepsilon * \sigma * S * (T_{surface}^4)$$

Où:

- $\varepsilon$ est l'émissivité du radiateur recouvert de miroirs, égale à 0,79,
- $\sigma$ est la constante de Stefan Boltzmann,
- S est la surface radiative du radiateur,

En considérant, pour simplifier, que la surface S radiative du radiateur est de 1m$^2$ (mètre carré), que la température de la charge thermique $T_{charge}$ est égale a la température maximale autorisée $T_{maxlimite}$ de 343,15K et qu'un gradient $\Delta T$ de 20 est suffisant, la puissance rayonné $P_R$ maximale vaut :

$$0,79 * \sigma * (343,15 - 20)^4 = 488W\,(Watt)$$

Toutefois, en pratique, le radiateur absorbe certaines radiations.

En effet, comme cela a été vu ci-dessus, par exemple la face nord au solstice d'été reçoit un ensoleillement qui est absorbé par le radiateur. L'environnement du radiateur varie donc en fonction de la position de la Terre sur son orbite autour du Soleil. La puissance absorbée $P_{solarabsorbée}$ par le radiateur sur la face nord au solstice d'été, en considérant que l'intensité du flux solaire est de 1400W/m$^2$ (Watt par mètre carré), est donnée par le calcul suivant :

$$P_{solarabsorbée} = 1400 * \sin(23,5°) * 0,27 = 151W$$

En outre, le radiateur est monté à proximité du corps du satellite et d'autres équipements, de sorte que le champ de vision du radiateur n'est pas complètement tourné vers l'espace froid. Typiquement, il a été déterminé que le facteur de vue du radiateur vers l'espace est de 95% (pourcents) et que le facteur de vue du radiateur vers le panneau solaire est de 5%.

Le facteur de vue est ici une évaluation de la proportion d'une surface qui est directement influencée par le rayonnement thermique d'un corps, tel que le corps du satellite ou un panneau solaire, ou par le rayonnement thermique d'un milieu, tel que l'espace.

La température de l'espace est de 3K (Kelvins), présentant un flux de rayonnement faible, typiquement de 5mW/m$^2$, (milliwatt par mètre carré). Le panneau solaire est à une température de 323K, et présente un flux de rayonnement plus élevé, typiquement de 620W/m$^2$. Le bilan de la puissance absorbée par le radiateur due à son environnement $P_{environment}$ est alors, toujours en considérant une surface de 1m$^2$:

$$P_{environnement} = \frac{95}{100}*0.005 + \frac{5}{100}*620 = 31W$$

La puissance nette de rejection $P_{nette}$ du radiateur, c'est-à-dire la puissance correspondant à la chaleur que le radiateur peut évacuer est de :

$$P_{nette} = P_R - P_{solarabsorbée} - P_{environnement} = 488 - 151 - 31 = 307W$$

La valeur ci-dessus correspond à la pire des situations pour la face nord, c'est-à-dire lorsque son ensoleillement est maximal au solstice d'été. Or, la puissance utile est une valeur fixe du radiateur. Le radiateur ne peut donc avoir une puissance nette de rejection supérieure à 307W.

A l'équinoxe, l'ensoleillement de la face nord est nul, l'inclinaison de l'orbite de la Terre autour du Soleil étant de 0°. La puissance $P_R$ rayonnée par le radiateur est de :

$$P_R = P_{nette} + P_{solarabsorbée} + P_{environnement} = 307 + 0 + 31 = 338W$$

Il en est déduit une température moyenne $T_{surface}$ à la surface du radiateur de 295,15K, et donc, pour un même gradient thermique $\Delta T$ de 20, la température $T_{charge}$ de la charge et de 315,15K, qui est nettement inférieur à la température maximale autorise $T_{maxlimite}$.

Par conséquent, la variation de l'environnement du radiateur au cours du fonctionnement du satellite génère des variations de température importantes des équipements du satellite et du radiateur.

Le tableau 1 ci-dessous récapitule la température $T_{charge}$ de la charge thermique pour un radiateur de l'état de la technique monté sur la face nord du satellite, au solstice d'été et aux équinoxes et au solstice d'hiver :

**Tableau 1**

| Condition | Ensoleillement de la face radiative | Chaleur évacuée (en W) | $T_{surface}$ (en K) | $\Delta T$ | $T_{charge}$ (en K) |
|---|---|---|---|---|---|
| solstice d'été | maximal | 307 | 323,15 | 20 | 343,15 |
| équinoxes et solstice d'hiver | nul | 307 | 295,15 | 20 | 315,15 |

La performance du radiateur est donc dimensionnée par le besoin de limiter la température de la charge en tenant compte des pires conditions, c'est-à-dire, pour la face nord, au solstice d'été, avec ensoleillement maximal. Or, ces conditions n'apparaissent que pour une durée limitée, de quelques jours par an, et le reste de l'année, la température de la charge et du radiateur sont moins élevées, rendant le radiateur moins performant. En outre, cette variation de température à des effets indésirable sur le fonctionnement de la charge utile, par exemple en provoquant un vieillissement accéléré du au stress thermoélastique induit sur les composants thermosensibles.

Selon une réalisation de l'invention, dans laquelle le radiateur 25 est monté sur le deuxième bras 9, lui-même monté par exemple sur la face nord, l'ensoleillement est nul quelque soit la position de la Terre par rapport au Soleil, puisque, comme vu précédemment, le radiateur 25 est toujours dans l'ombre du panneau 23 solaire.

En outre, le radiateur 25 peut évacuer la chaleur par ses deux faces 26 radiatives.

La chaleur évacuée par le radiateur 25 selon la formule de Stefan-Boltzmann est là encore fonction de la température $T_{surface}$ moyenne de la surface du radiateur 25, qui est la même pour les deux faces 26 radiatives. $T_{surface}$ est prise, comme précédemment, à 323,15K, c'est-à-dire pour arriver à une température de la charge $T_{charge}$ égale à la température maximale autorisée $T_{maxlimite}$ de 343,15K, et pour un gradient $\Delta T$ thermique de 20. En outre, comme des miroirs ne sont plus nécessaires, le radiateur 25 peut être recouvert d'une couche de peinture augmentant l'émissivité à 0,9. Ainsi, la puissance rayonnée $P_{Rface1}$ et $P_{Rface2}$, par chaque face 26 radiative est de :

$$P_{R,face1} = P_{R,face2} = 0.9 * \sigma * (323{,}15^4) = 555W$$

En considérant la situation à 00 :00, une première face 26 radiative est parallèle au panneau 23 solaire. Il a été déterminé que les principaux équipements dans son champ de vision sont notamment :

- la face arrière du panneau 23 solaire, avec un facteur de vue de 40%, à une température de 323,15K, et générant un flux de rayonnement de 620 W/m$^2$ ;

- le corps 2 du satellite 1, avec un facteur de vue de 5%, à une température de 313,15K, et générant un flux de rayonnement de 430 W/m$^2$.

Le reste voit l'espace à 3K, avec un flux de rayonnement de 5 mW/m$^2$.

Ainsi, en considérant toujours une surface de 1m$^2$, le flux de chaleur $P_{environnement,face1}$ reçu depuis l'environnement du radiateur 25 sur cette première face 26 radiative est de :

$$P_{environnement,face1} = \frac{40}{100} * 620 + \frac{5}{100} * 430 + \frac{55}{100} * 0{,}005 = 269W$$

La deuxième face 26 radiative a sont champ de vision obscurci par le corps 2 du satellite à hauteur de 5%, la reste étant tourné vers l'espace. Le flux de chaleur $P_{environnement,face2}$ reçu depuis l'environnement du radiateur 25 sur cette deuxième face 26 radiative est de :

$$P_{environnement,face1} = \frac{5}{100} * 430 + \frac{95}{100} 0{,}005 = 22W$$

Par conséquent, le bilan de la puissance dite utile du radiateur 25, à 00 :00, c'est-à-dire la puissance correspondant à la chaleur que le radiateur peut évacuer est de :

$$(P_{R,face1} - P_{environnement,face1}) + (P_{R,face2} - P_{environnement,face2}) = (555 - 269) + (555 - 22) = 820W$$

La valeur pour la position à 12 :00 est la même.

Le même calcul peut être repris pour la position du satellite à 06 :00, dans laquelle les faces 26 radiatives du radiateur 25 sont orientées perpendiculairement au panneau 23 solaire. L'environnement des deux faces 26 radiatives est similaire, et il a été déterminé que pour chaque face, les principaux équipements dans le champ de vision sont notamment :

- le panneau 23 solaire, avec un facteur de vue de 15%, à une température de 323,15K, et générant un flux de rayonnement de 620 W/m$^2$ ;

- le corps 2 du satellite 1, avec un facteur de vue de 5%, à une température de 313,15K, et générant un flux de rayonnement de 430 W/m$^2$.

Le reste voit l'espace à 3K, avec un flux de rayonnement de 5 W/m$^2$.

Le flux de chaleur reçu depuis l'environnement du radiateur 25 sur chaque face 26 radiative est de :

$$P_{environnement,face1} = P_{environnement,face2} = \frac{15}{100} * 620 + \frac{5}{100} * 430 + \frac{80}{100} * 0{.}005 = 114W$$

Comme indiqué pour l'exemple de l'état de la technique, la puissance utile reste constante tout au long du fonctionnement du satellite.

Il en est déduit une température moyenne $T_{surface}$ à la surface du radiateur de 318,15K, et donc, pour un même gradient thermique $\Delta T$ de 20, la température $T_{charge}$ de la charge et de 338,15K.

La valeur pour la position à 18 :00 est la même.

Le tableau 2 ci-dessous récapitule la température maximale $T_{max}$ de la charge thermique pour un radiateur 25 monté sur le deuxième bras 9 dans l'ombre du panneau solaire 23, aux quatre positions 00 :00, 06 :00, 12 :00 et 18 :00 :

**Tableau 2**

| Condition | Facteur de vue vers le panneau solaire (23) | | Chaleur évacuée (en W) | $T_{surface}$ (en K) | $\Delta T$ | $T_{charge}$ (en K) |
|---|---|---|---|---|---|---|
| | 1 ère face | 2ème face | | | | |
| **00 :00** | 40% | 0% | 820 | 323,15 | 20 | 343,15 |
| **06 :00** | 15% | 15% | 820 | 318,15 | 20 | 338,15 |
| **12 :00** | 0% | 40% | 820 | 323,15 | 20 | 343,15 |
| **18 :00** | 15% | 15% | 820 | 318,15 | 20 | 338,15 |

Les modifications dans l'environnement du radiateur 25 au cours du fonctionnement du satellite ont peu d'impact sur la température du radiateur 25 et des équipements du satellite 1. Ainsi, la variation de température $T_{charge}$ de la charge thermique n'est que de 5K. Les effets indésirables liés aux effets thermoélastiques sont nettement réduits.

En outre, comme il n'est pas nécessaire de mettre en place des miroirs, les performances du radiateur 25 restent sensiblement constantes tout au long de la durée de vie du satellite.

Plus précisément, la mise en place deux couples 5a, 5b de bras porteurs sur le satellite 1 permet d'obtenir des performances plus que deux fois supérieures à celles des radiateurs de l'état de la technique, grâce notamment à l'utilisation de quatre faces 26 radiatives au lieu de deux. En ajoutant des radiateurs selon l'état de la technique sur les faces nord et sud, les performances totales sont triplées.

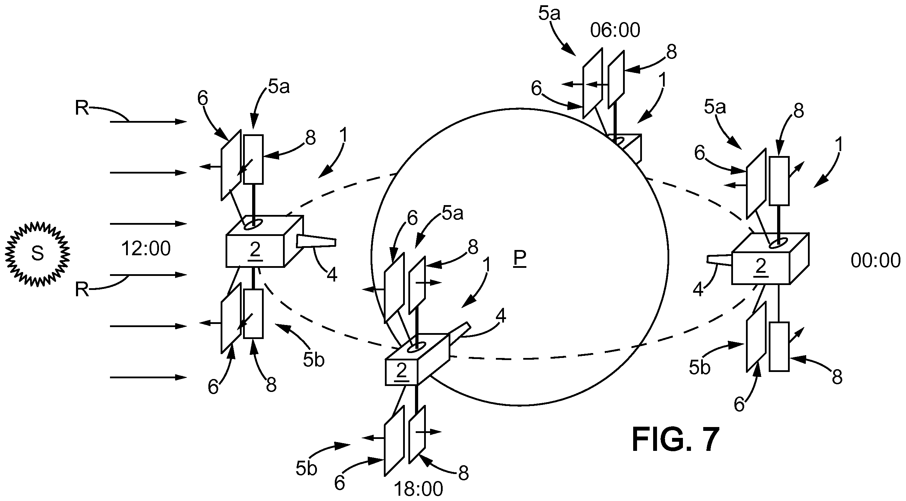

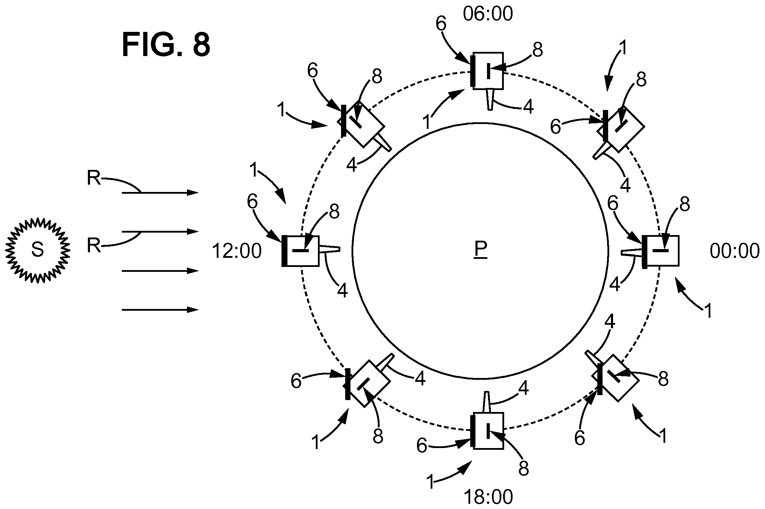

Les figures 7 et 8 illustrent un deuxième montage d'un couple 5 de bras porteurs sur le satellite 1. Sur la figure 7, de manière similaire à la figure 3, la face 24 frontale du panneau 23 solaire est repérée par une flèche qui lui est perpendiculaire, et une première face 26 radiative du radiateur 25 est également repérée par une flèche qui lui est perpendiculaire.

Dans ce deuxième montage, le radiateur 25 est orienté selon l'axe X, c'est-à-dire que ses faces 26 radiatives sont sensiblement perpendiculaires à l'axe X du satellite 1. En d'autres termes, le radiateur 25 est décalé à 90° par rapport au premier montage, tandis que le panneau 23 solaire pivote comme précédemment pour conserver sa position relative par rapport au radiateur 25. Ce deuxième montage trouve un intérêt particulier lorsque la planète P est un point chaud pour le satellite 1.

Ainsi, à la position marquée 0 :00, l'axe O opérationnel est perpendiculaire à l'axe X, et protège le radiateur 25 des rayons R du Soleil, mais également du rayonnement de la planète P, lequel est parallèle à la direction Z du satellite. La première face 26 radiative est perpendiculaire à la face 24 frontale du panneau 23 solaire. A la position marquée 12 :00, la configuration entre le panneau 23 solaire et le radiateur est sensiblement la même. Le panneau 23 solaire ne bloque plus le rayonnement de la planète P qui atteint alors le radiateur 25. Toutefois, comme le radiateur 25 est orienté suivant l'axe X, les faces 26 radiatives ne sont pas en vis-à-vis de la planète P, de sorte qu'elles ne sont pas complètement atteintes par le rayonnement de la planète P.

A la position marquée 06 :00, l'axe O opérationnel est parallèle à l'axe X, et le panneau 23 solaire protège toujours le radiateur 25 des rayons R. Le rayonnement de la planète P, toujours parallèle à l'axe Z du satellite, n'atteint pas ou peu les faces 26 radiatives du radiateur 25. La première face 26 radiative est parallèle à la face 24 frontale du panneau 23 solaire. A la position marquée 18 :00, la configuration entre le panneau 23 solaire et le radiateur est sensiblement la même.

Ainsi, le radiateur 25 est toujours protégé des rayons R du Soleil S, tandis que le rayonnement de la planète P n'a que peu d'influence sur sa température.

Selon un mode de réalisation particulièrement avantageux, les bras 7 et 9 sont pliables par rapport à la face 18 de support. A cet effet, les bras 7, 9 sont articulés en rotation par rapport au corps 2, selon un axe d'articulation perpendiculaire à l'axe A de rotation. Chaque bras 7, 9 peut ainsi prendre deux positions extrêmes :

- une position déployée, dans laquelle le bras 7, 9 considéré est en saillie sur la face 18 de support correspondante, par exemple sensiblement parallèles à l'axe Y du satellite 1,

- une position repliée, dans laquelle le bras 7, 9 considéré est ramené sensiblement parallèlement à la face 18 de support correspondante, par exemple sensiblement perpendiculaires à l'axe Y du satellite 1.

Par exemple, la portion 19 extrême proximale du premier bras 7 est montée pivotante sur la périphérie externe de la pièce 13 rotative du module 10 de montage autour d'une direction parallèle à l'axe d'articulation, et le premier dispositif 8, en l'occurrence le panneau 23 solaire, est monté pivotant autour d'une direction parallèle à l'axe d'articulation sur la portion 20 extrême distale du premier bras 7. Le deuxième bras 9 présente par exemple une flexibilité au moins sur sa portion 21 extrême proximale permettant une rotation autour d'une direction parallèle à l'axe d'articulation en se pliant.

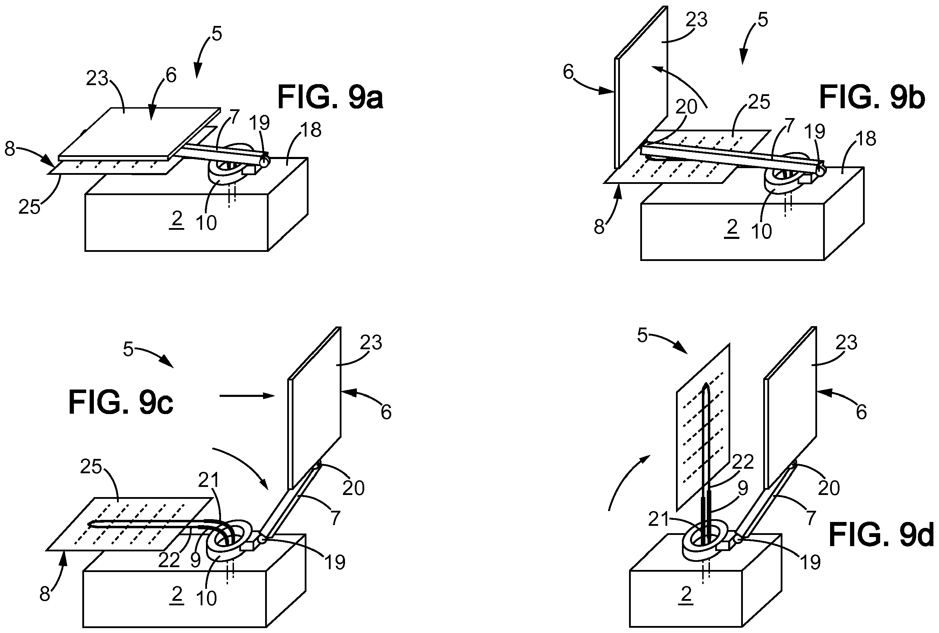

En position repliée des deux bras 7, 9 (figure 9a), le radiateur 25 est contre la face 18 de support et le panneau 23 solaire est superposé sur le radiateur 25. En d'autres termes, les faces 26 radiatives du radiateur 25 et la face 24 frontale du panneau 23 solaire sont sensiblement perpendiculaires à l'axe Y du satellite.

Pour passer les deux bras 7, 9 en position déployée, le panneau 23 solaire est pivoté sur la portion 20 extrême distale du premier bras 7 (figure 9b), puis le premier bras 7 est pivoté en positon déployée (figure 9c). Enfin, le deuxième bras 9 est amené en position déployée grâce à sa flexibilité (figure 9d), de sorte que le radiateur 25 est amené sur l'axe A de rotation.

La position repliée des deux bras 7, 9 trouve un intérêt particulier lors du lancement du satellite. En effet, en phase de lancement, le satellite est avantageusement le plus compact possible pour être placé dans un lanceur. Ce n'est qu'une fois en orbite que les bras 7, 9 peuvent être mis en position déployée.

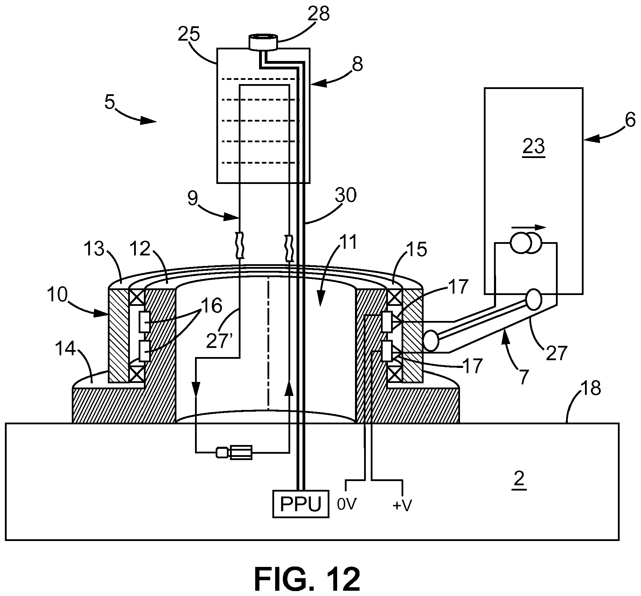

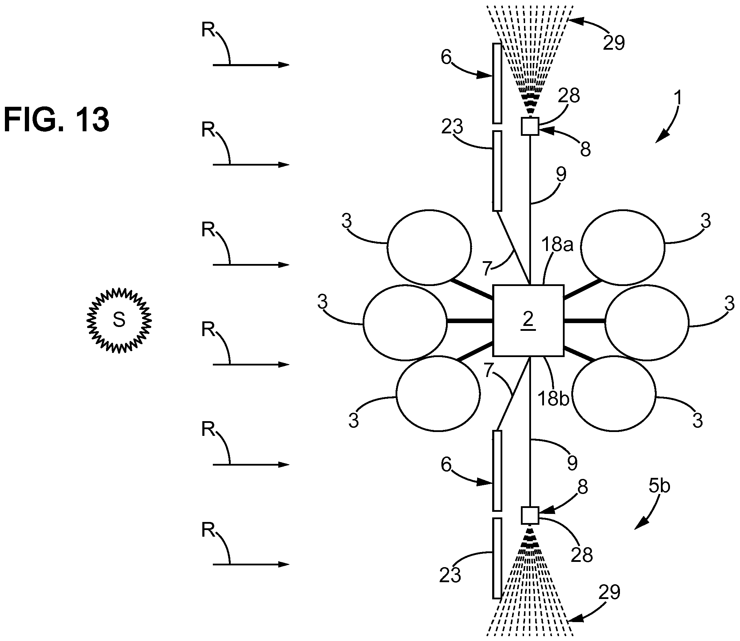

En variante, illustrée notamment sur les figures 12 et 13, le deuxième dispositif 8 comprend une tuyère **28** d'un moteur par exemple un moteur à plasma, en plus du radiateur 25. La tuyère 28 peut être placée sur la portion 22 extrême distale du deuxième bras 7 au-delà du radiateur 25, dans le prolongement du deuxième bras 9, et plus précisément dans l'alignement de l'axe A de rotation. Le module 10 de montage peut alors présenter une forme aussi bien en anneau qu'aplatie. Lorsque l'axe A de rotation est parallèle à l'axe Y du satellite 1, le jet **29** de plasma issu de la tuyère 28, dirigé selon la direction Y du satellite 1, est alors suffisamment éloigné des autres dispositifs du satellite 1 pour ne pas gêner voire abîmer les autres équipements du satellite 1. En outre, le jet 29 de plasma est alors, dans la pire des configurations, en contact avec la face arrière du panneau 23 solaire, opposée à la face 24 frontale fragile, couverte des cellules photovoltaïques. Par conséquent, le jet 29 de plasma n'endommage pas les cellules photovoltaïques. En outre, la tuyère 28 est protégée des rayons du soleil par le panneau 23 solaire, simplifiant le contrôle thermique. En effet, lors du fonctionnement normal des moteurs à plasma, une quantité importante de chaleur peut être dégagée, qui doit être évacuée dans l'espace pour éviter que les tuyères 28 ne surchauffent. Protéger les tuyères 28 des rayons R du Soleil S permet de réduire la taille, la masse et la complexité du système de contrôle thermique du satellite 1.

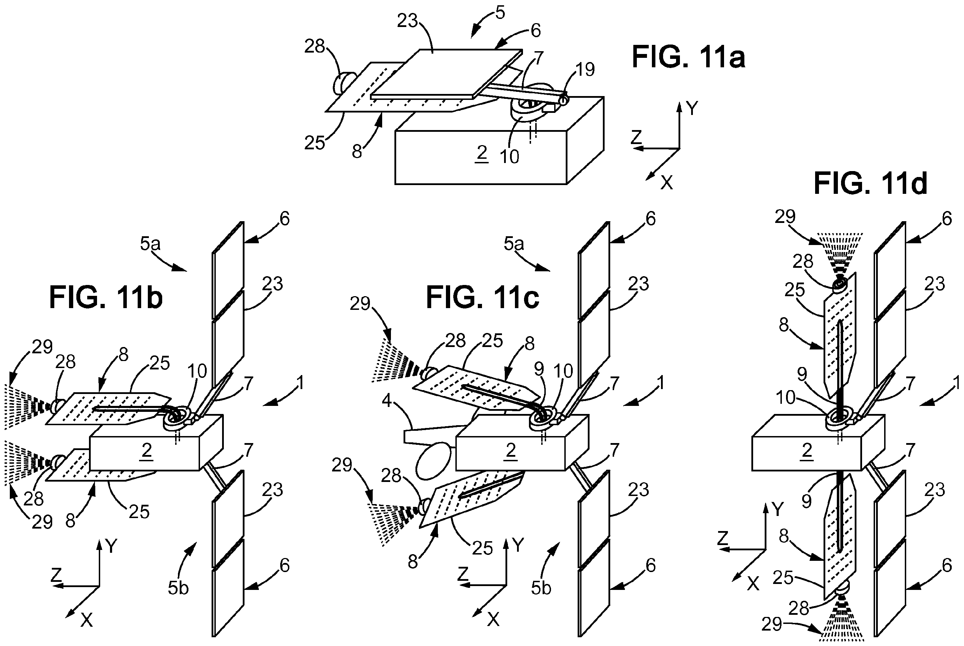

De même que précédemment, en position repliée des deux bras 7, 9, le radiateur 25 et le panneau 23 solaire sont orientés perpendiculairement à l'axe Y du satellite 1. La tuyère 28 est alors orientée de telle sorte que le jet 29 de plasma est orienté dans une direction parallèle à l'axe Z du satellite 1 (figure 11 a).

Lorsque le premier bras 7 est mis en position déployée (figure 11 b), le moteur peut être mis en fonctionnement par exemple pour déplacer le satellite 1.

De plus, le deuxième bras 9 peut prendre une position intermédiaire à la position déployée et à la position repliée, dans laquelle il forme un angle non nul avec l'axe Z. Dans cette position intermédiaire, le jet 29 de plasma est également orienté dans une direction formant un angle non nul avec l'axe Z du satellite 1, de manière à pouvoir rectifier la position du satellite 1 tout en déplaçant le satellite 1 (figure 11 c).

Lorsque les deux bras 7, 9 sont en position déployée (figure 11 d), le jet 29 de plasma est alors avantageusement orienté selon la direction Y uniquement, permettant de rectifier uniquement la position du satellite 1. Dans cette position, les jets 29 de plasma éjectés des tuyères 28 de chaque couple 5a, 5b de bras porteurs sont suffisamment éloignés, grâce au deuxième bras 9, du corps 2 du satellite 1 ainsi que des équipements du satellite pour ne pas être gêner ni pour endommager les équipements, comme vu précédemment. En outre, les moteurs étant en général mis en oeuvre pour maintenir ou corriger la position du satellite selon l'axe Y nord-sud du satellite 1, le fait que les jets 29 de plasma soient orientés uniquement selon l'axe Y permet d'optimiser la consommation du carburant.

Afin de permettre le montage du moteur 28 sur le deuxième bras 9, en plus du radiateur 25, le deuxième bras 9 comprend des liaisons **30** appropriées passant par l'ouverture 11 du module 10 pour relier la tuyère 28 à une unité PPU de commande.

En variante, comme illustré sur la figure 13, le deuxième dispositif 8 peut ne comprendre qu'un moteur 28 à plasma, placé à l'extrémité distale du deuxième bras 9.

En variante encore, le satellite 1 peut comprendre un unique couple 5 de bras porteurs, placés sur une face 18 de support, par exemple la face nord, tandis que sur la face sud, le satellite 1 comprend un panneau solaire monté en rotation sur le corps 2. Le deuxième dispositif 8 du couple 5 peut être par exemple une antenne **31** à réseau phasé, qui génère de la chaleur. Le premier dispositif 6, bloquant les rayons R du Soleil S arrivant sur l'antenne 29, peut être comme précédemment un panneau solaire ou plus généralement un panneau **32** bloquant, revêtu d'une couche d'un matériau bloquant les rayons R du Soleil S mais laissant passer les ondes nécessaires au fonctionnement de l'antenne 31. Ainsi, une augmentation de la température de l'antenne 31, due aux rayons R, qui pourrait nuire au bon fonctionnement de l'antenne 31, est limitée. Il peut être prévu que le premier dispositif 6 comprenne à la fois un panneau solaire 23 et un panneau 32 bloquant, par exemple montés l'un à la suite de l'autre le long du premier bras 7.

De manière générale, tout couple 5 de bras 7, 9 porteurs comprend avantageusement un premier dispositif 6 apte à bloquer les rayons R du Soleil, ou de tout autre source de rayons susceptibles d'augmenter la température, et un deuxième dispositif requérant un contrôle de sa température, à l'abri autant que possible des rayons chauffants.

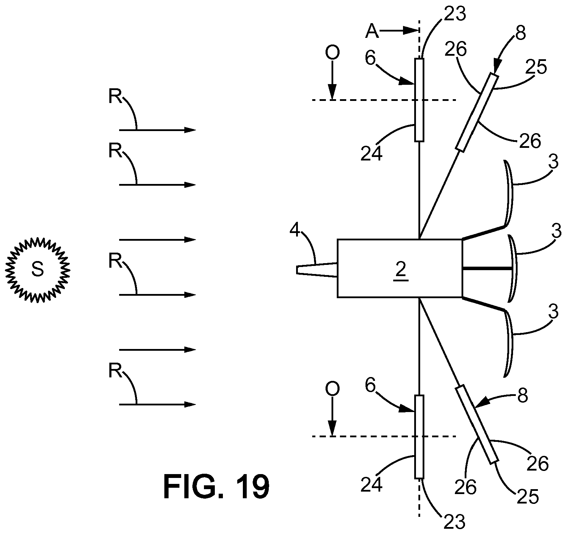

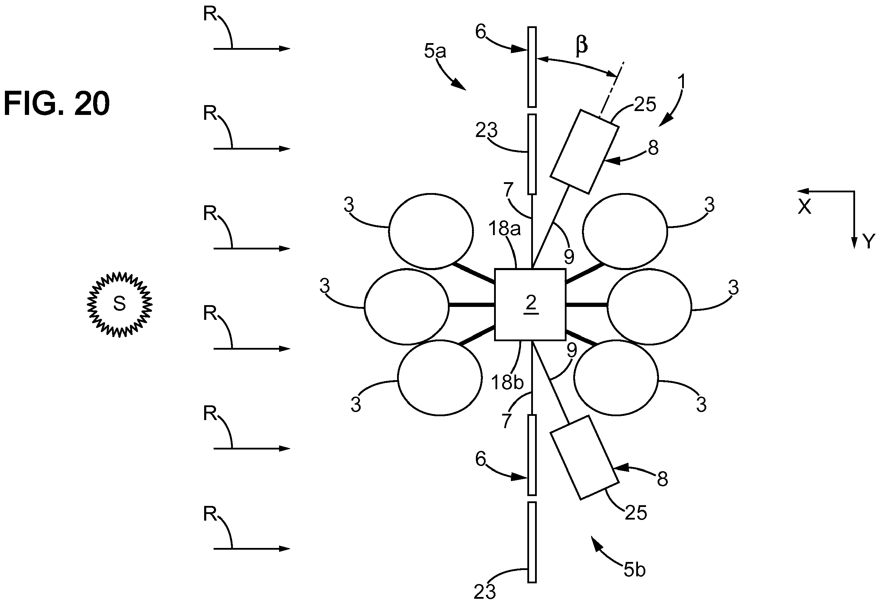

Sur les figures 15 à 22, il est illustré un véhicule 1 muni d'au moins un couple 5 de bras porteurs, et de préférence deux couples 5a, 5b, selon un deuxième mode de réalisation.

Selon ce deuxième mode de réalisation, le deuxième bras 9 comprend au moins une portion flexible autour de toute direction perpendiculaire à l'axe A de rotation, et le deuxième dispositif 8 est déporté par rapport à l'axe A de rotation, autour duquel il pivote grâce à la flexibilité du deuxième bras 9. A cet effet, par exemple, les moyens 17 de liaison fluidique entre le corps 2 et le deuxième dispositif 8 sont des tuyaux flexibles. Le premier bras 7 et le premier dispositif 6 sont alignés sur l'axe A de rotation. Plus précisément, le premier bras 7 et le premier dispositif 6 sont compris dans un plan comprenant l'axe A de rotation. L'axe A de rotation est ici encore parallèle à l'axe Y du satellite 1

Selon un exemple de réalisation, la pièce 13 rotative du module 10 de montage est munie de deux oreilles **35** diamétralement opposée. Le premier bras 7 comprend deux branches **36**, fixées sur les oreilles 36 de la pièce 13 rotative. Ainsi, le plan comprenant les deux branches 36 du premier bras 7 comprend également l'axe A de rotation.

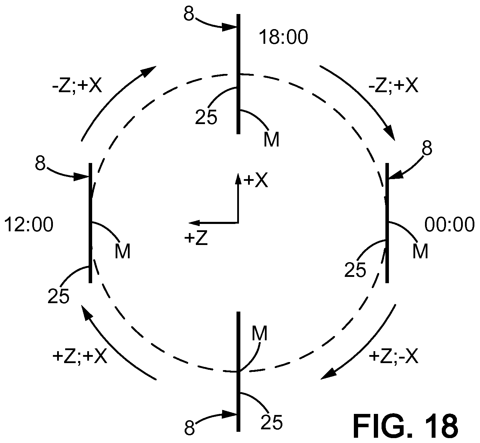

Le deuxième bras 9 comprend au moins une portion **33** extrême proximale flexible fixée sur la face 16 de support du corps 2 du satellite, en passant par l'ouverture 11 du module 10 de montage. La portion **34** extrême distale, sur laquelle le deuxième dispositif 8 est monté, peut être rigide ou non. La portion 33 extrême proximale est flexible autour de l'axe Y du satellite 1, de sorte que, comme illustré par des traits discontinus sur les figures 15 et 18, un point **M** du deuxième dispositif 8 peut décrire un cercle dans un plan parallèle à aux axes Z et X du satellite 1, dont le centre est sur l'axe A de rotation. Le deuxième bras 9 comprend, comme cela a été vu ci-dessus, au moins un point **F** fixe par rapport au corps 2. Par exemple, le deuxième bras 9 comprend au moins un point sur l'axe A de rotation. Le deuxième bras 9 est alors incliné d'un angle ß par rapport à l'axe A de rotation, et donc par rapport au premier bras 7, de sorte que le deuxième dispositif 6 est déporté par rapport à l'axe A de rotation.

Les figures 15 à 20 illustrent un exemple de montage d'un couple 5, et de préférence de deux couples 5a, 5b, de bras porteurs selon le deuxième mode de réalisation sur le satellite 1, dans lequel, comme précédemment, le premier dispositif 6 comprend un panneau 23 solaire et le deuxième dispositif 8 comprend un radiateur 25, les faces 26 radiatives étant perpendiculaires à l'axe Z du satellite.

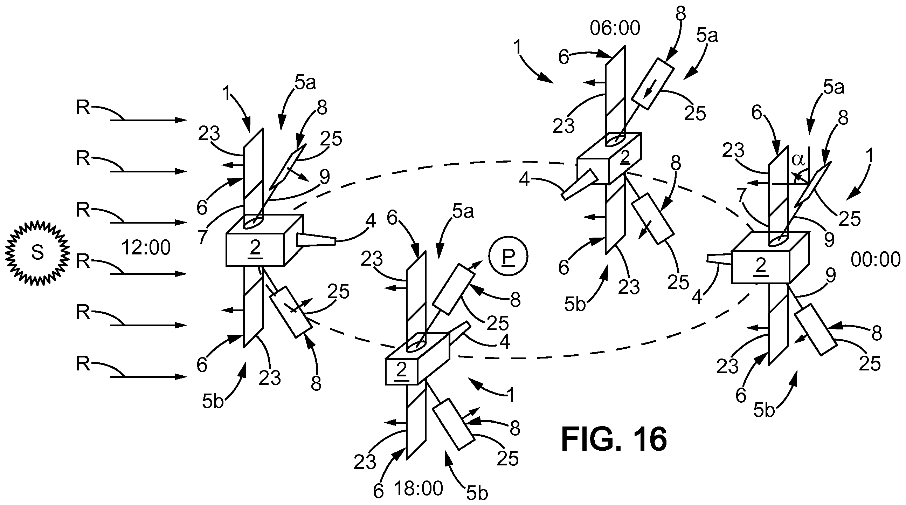

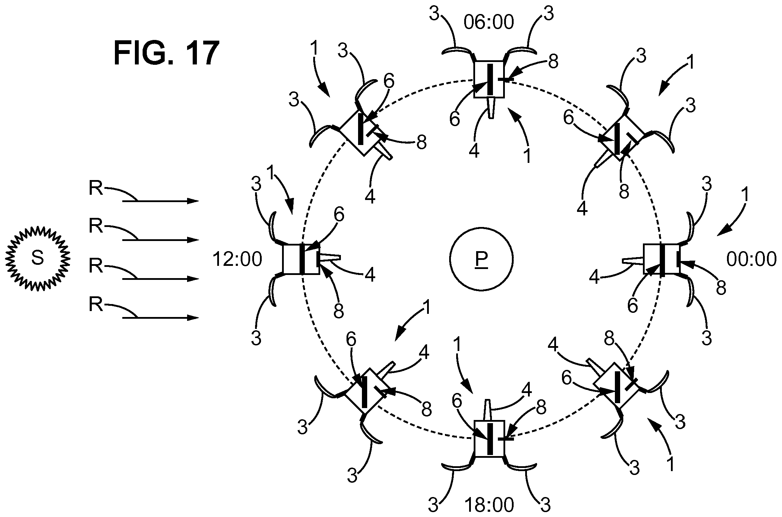

Les figures 16 et 17, de manière sensiblement similaire aux figures 3 et 4, illustrent quelques positions d'un satellite 1 en orbite autour d'une planète P.

A la position marquée 00 :00, comme précédemment, l'axe O opérationnel est parallèle à l'axe Z du satellite. Le radiateur 25 est à l'ombre du panneau solaire. Les faces 26 radiatives sont comprises dans un plan incliné par rapport à l'axe A de rotation de l'angle ß et parallèle à l'axe X.

Lorsque le panneau 23 solaire pivote de 90° pour arriver à la position marquée 06 :00, l'axe O opérationnel est parallèle à l'axe X du satellite 1. Pour permettre le pivotement du panneau 3 solaire, le deuxième bras 9 a pivoté d'un quart de cercle autour de l'axe Y, dans une direction positive (+) selon l'axe Z et dans une direction négative (-) selon l'axe X. Les faces 26 radiatives sont perpendiculaires à l'axe Z du satellite.

Puis, le panneau 23 solaire continue de pivoter pour que son axe O opérationnel suive les rayons R du Soleil S pendant le déplacement du satellite 1 et se mette de nouveau parallèle à l'axe Z à la position marquée 12:00. En même temps, le deuxième bras 9 a également pivoté autour de l'axe Y du satellite d'un quart de cercle, dans une direction positive (+) selon l'axe Z et dans une direction positive (+) selon l'axe X.

Le panneau 23 continue de pivoter en suivant les rayons R du Soleil s et arrive à la position marquée 18 :00 dans laquelle l'axe O opérationnel est de nouveau parallèle à l'axe X du satellite 1. Le deuxième bras 9 a, là encore, pivoté d'un quart de cercle autour de l'axe Y du satellite, dans une direction négative (-) selon l'axe Z et dans une direction négative (-) selon l'axe X.

La figure 18 illustre de manière schématique les différentes positions du radiateur 25 seul, pivotant autour de l'axe Y du satellite, le signe (+) ou (-) devant l'axe Z ou X indiquant respectivement une direction positive ou négative selon l'axe en question.

L'efficacité du radiateur 25 à dissiper la chaleur peut être augmentée en optimisant l'angle ß d'inclinaison du deuxième bras.

En outre, de même que précédemment, la longueur des bras 7, 9 est choisie de sorte que le panneau 23 solaire et le radiateur 25 ne gênent pas les autres équipements du satellite 1, et notamment d'obstruent pas le champ de vision des antennes 3, 4.

Enfin, de même que précédemment, le premier bras 7 et le deuxième bras 9 peuvent être articulés sur le corps du satellite 1 selon un axe d'articulation, de sorte que les bras 7, 9 peuvent prendre une potion repliée et une position déployée. Par exemple, la portion 19 proximale et la portion 20 distale du premier bras 7 sont montées chacune pivotante autour d'une direction parallèle à l'axe d'articulation respectivement sur le module 10 de montage et sur le premier dispositif 6. De manière similaire, la portion 33 proximale et la portion 34 distale du deuxième bras 9 sont montés chacune pivotante autour d'une direction parallèle à l'axe d'articulation respectivement sur le corps 2 du satellite 1 et sur le deuxième dispositif 8.

Afin de réduire davantage l'encombrement du satellite 1, et en particulier lors du lancement, avant sa mise en orbite, chaque bras 7, 9 et/ou chaque dispositif 6, 8 peuvent comprendre plusieurs sections articulées en rotation les unes par rapport aux autres, de manière à pouvoir s'empiler les unes sur les autres lorsque les bras 7, 9 sont en position repliée.

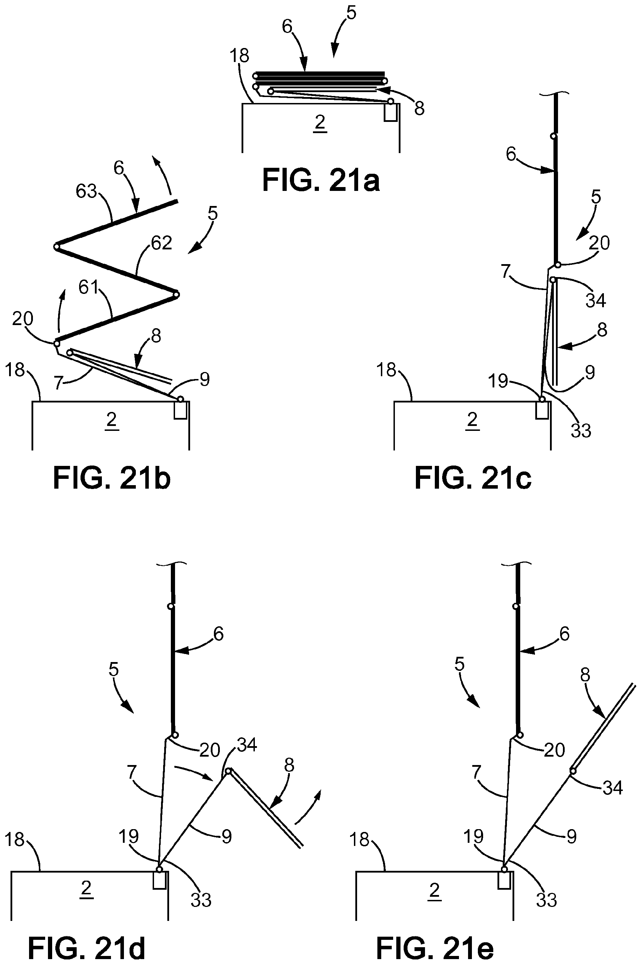

Par exemple, comme illustré sur les figures 21a à 21e, le premier bras 7 comprend une unique section et le premier dispositif 6 comprend plusieurs sections 6.1, 6.2 et 6.3 successives, la première section 6.1 du premier dispositif 6 étant montée pivotant sur l'extrémité distale du premier bras 7. Le deuxième bras 9 comprend une unique section, tout comme le deuxième dispositif 8.

En position pliée, le premier bras 7 est contre, ou au moins directement en vis-à-vis de et sensiblement parallèle à, la face 16 de support. Successivement sur le premier bras 7, on trouve alors successivement le deuxième bras 9, le deuxième dispositif 8, puis les sections 6.1, 6.2 et 6.3 empilés (figure 21 a). Le premier bras 7 et les sections 6.1, 6.2, 6.3 du premier dispositif 6 sont déployés, soulevant le deuxième bras 9 et le deuxième dispositif 8 (figure 21 b). Lorsque le premier bras 7 est en position déployée (figure 21 c), le deuxième bras 9 est alors contre le premier bras 7, et le deuxième dispositif 8 ne peut pas être déployé sous peine de gêner le premier dispositif 6 (figure 21 d). Le deuxième bras 9 est alors éloigné du premier bras, par exemple grâce à sa flexibilité, et le deuxième dispositif 9 peut être déployé en position d'utilisation (figure 21 e).

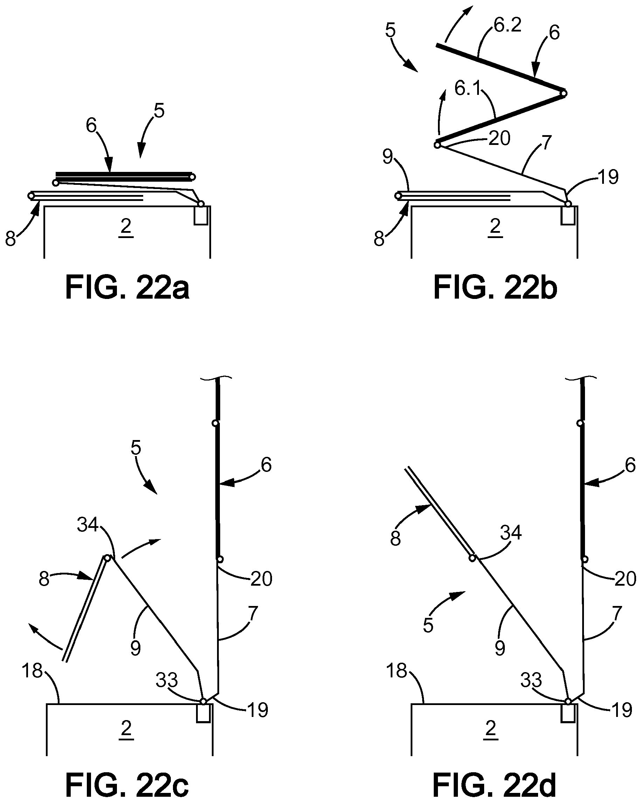

Une variante possible est illustrée sur les figures 22a à 22d, dans laquelle le premier dispositif 6 comprend deux sections 6.1 et 6.2. En position pliée, le deuxième dispositif 8 est contre, ou au moins directement en vis-à-vis de et sensiblement parallèle à, la face 16 de support. Le deuxième bras 9 est replié sur le deuxième dispositif 8. Le premier bras 7 est empilé sur le deuxième bras 9, et les sections 6.1 et 6.2 du premier dispositif 6 sont repliés empilés sur le premier bras 7 (figure 22a). Le premier bras 7 est alors déployé avec les sections 6.1 et 6.2 du premier dispositif 6, le deuxième bras 9 restant en position pliée (figure 22b). Une fois que le premier bras 7 est complètement amené en position déployée, le deuxième bras 9 et le deuxième dispositif 8 amorcent leur déploiement (figure 22c) jusqu'à ce que le deuxième bras 9 soit amené en position déployée et le deuxième dispositif 8 soit également déployé en position de fonctionnement.

Le radiateur 25 monté sur le couple 5 de bras porteur tel que décrit ci-dessus, pour les deux modes de réalisation, peut mettre en oeuvre tout type de moyens pour assurer le transfert de la chaleur des équipements du satellite aux faces 26 radiatives du radiateur 25. Par exemple, les moyens peuvent comprendre la circulation d'un fluide caloporteur dans des canaux flexibles ou encore des canaux flexibles formant des boucles, connus sous le nom de « loop heat pipes ». Également, les moyens pour assurer le transfert de chaleur peuvent inclure des pompes mécaniques ou encore des thermopompes.

Dans les deux modes de réalisation décrits ci-dessus, lorsque les faces 26 radiatives du radiateur 25 sont perpendiculaires à la face 24 frontale du panneau solaire 23, il apparaît un gradient de température dans le radiateur 25.

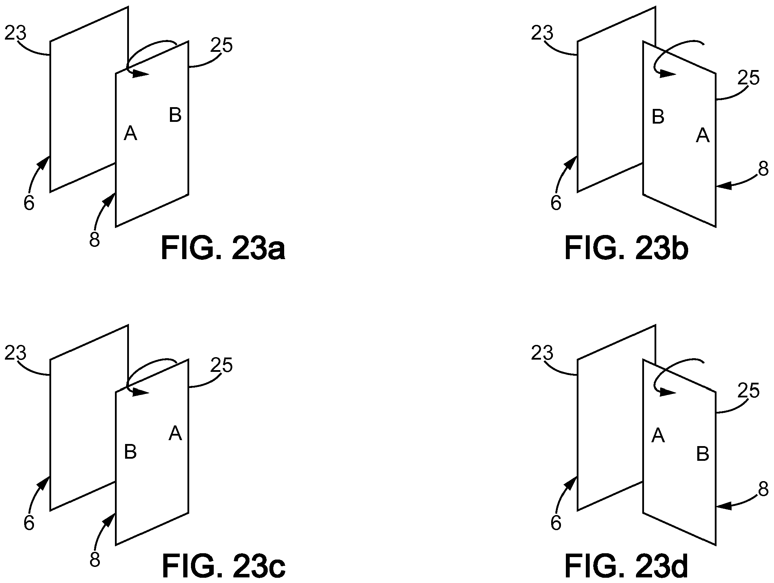

Par exemple, selon le premier mode de réalisation et le premier mode de fonctionnement, dans lequel le radiateur est aligné avec l'axe Z du satellite 1, à la position marquée 00 :00, les faces 26 radiatives sont sensiblement parallèles au panneau 23 solaire, de sorte que l'ensemble de la face 26 radiative en vis-à-vis du panneau 23 solaire est sensiblement à la même température (figure 23a).

A la position marquée 06 :00, l'axe O opérationnel étant parallèle à l'axe X du satellite 1, le radiateur 25 présente un côté, noté B, plus proche du panneau 23 solaire que l'autre côté, noté A, les côtés A et B étant définis selon l'axe X dans cet exemple. Le côté B est donc a une température supérieure à celle du côté A, et un gradient de température apparaît (figure 23b).

A la position marquée 12 :00, l'axe O opérationnel est de nouveau parallèle à l'axe Z, et il n'y a pas de gradient de température dans le radiateur.

A la position marquée 18 :00, une configuration similaire à celle de la position marquée 06 :00 se produit, à ceci près que le côté A est plus proche du panneau solaire que le côté B, faisant apparaître de nouveau un gradient de température dans le radiateur 25 (figure 23d), mais dans le sens opposé à celui de la position marquée 06 :00.

L'apparition du gradient thermique dans le radiateur 25 est hautement indésirable. En effet, par exemple, lorsque le fluide caloporteur circulant dans le radiateur 25 entre par le côté B, à la position marquée 06 :00, le fluide ressortira du côté A plus froid qu'à la position marquée 18 :00. Ainsi, l'efficacité du radiateur 25 à dissiper la chaleur varie au cours du déplacement du satellite 1 en orbite.

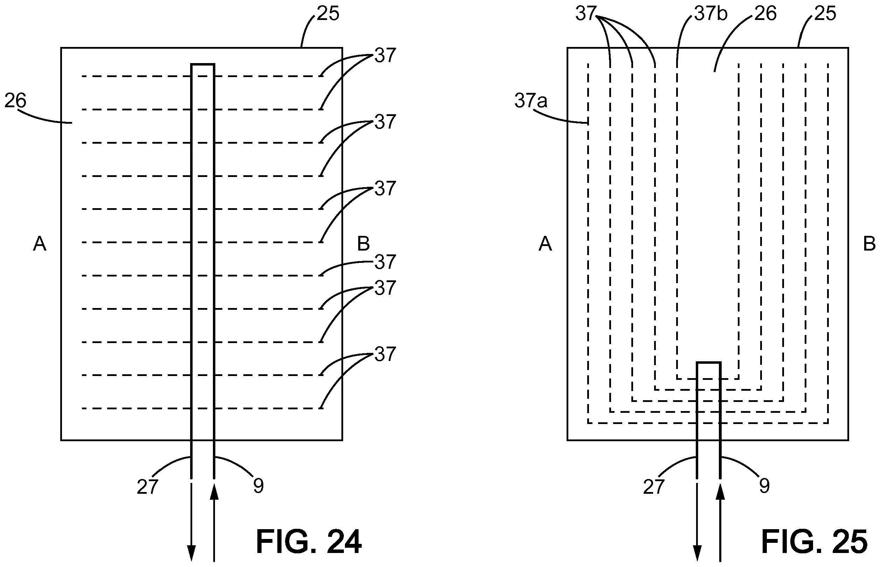

Pour remédier à ce problème, le radiateur 25 comprend au moins un, et de préférence une pluralité de caloducs **37**, répartis sur ses faces 26 radiatives, qui distribuent la chaleur dans tout le radiateur 25. Les caloducs 37 sont représentés en traits discontinus sur les figures 24 et 25. La température est ainsi homogénéisée sur l'ensemble de chaque face 26 radiative.

Selon un premier mode de réalisation, les caloducs 37 sont répartis sur des lignes parallèles entre elles, dans le sens de la largeur du radiateur 25, de manière à aller du côté A jusqu'au côté B. Les caloducs 37 sont en contact avec les moyens 27 de liaison fluidique entre le corps 2 et le radiateur 25 pour assurer un transfert thermique.

Selon un deuxième mode de réalisation, chaque caloduc 37 présente une forme de U. Plus précisément, un caloduc 37 comprend deux branches verticales, dans le sens de la hauteur du radiateur 25, et une branche centrale horizontale, dans le sens de la largeur du radiateur 25, reliant les deux branches verticales. La branche horizontale est en contact avec les moyens 27 de liaison fluidique entre le corps 2 et le radiateur 25 pour assurer un transfert thermique. Un premier caloduc 37a présente des dimensions supérieures à celles des autres caloducs 37, c'est-à-dire que la distance entre ses branches verticales est supérieure à celle des autres caloducs. Symétriquement, un dernier caloduc 37b présente des dimensions inférieures à celles des autres caloducs 37, c'est-à-dire que la distance entre ses branches verticales est inférieure à celle des autres caloducs. Le premier caloduc 37a s'étend sensiblement de part en part du radiateur, du côté A jusqu'au côté B, le dernier caloduc 37b restant dans une zone centrale du radiateur 25. Une pluralité d'autres caloducs en forme de U de dimensions intermédiaires sont placés entre le premier caloduc 37a et le dernier caloduc 37b.

Le satellite 1 comprenant ainsi un couple 5, de préférence deux couples 5a, 5b, de bras porteurs, voit donc l'encombrement sur les faces du corps 2 diminué, facilitant la conception et l'installation des équipements. Par ailleurs, les équipements du satellite peuvent être de conception classique, c'est-à-dire qu'il n'est pas besoin de développer de nouvelles conceptions d'équipements. En utilisant des équipements existants, les coûts de fabrication du satellite 1 sont réduits.

En outre, notamment dans le cas où les deuxièmes dispositifs 8 sont des radiateurs 25, les performances thermiques sont augmentées sans augmenter de manière significative les coûts de fabrication du satellite 1. Par ailleurs, les performances sont stables tout au long de la durée de fonctionnement du satellite 1.

## Revendications

1. Véhicule (**1**) spatial, tel qu'un satellite, apte à être mis en orbite autour d'une planète (**P**), comprenant un corps (**2**), au moins un couple (**5**) de bras dits porteurs, un premier dispositif (**6**) monté sur un premier bras (**7**) porteur et un deuxième dispositif (**8**) monté sur un deuxième bras (**9**) porteur, véhicule (**1**) dans lequel le premier bras (**7**) est monté en rotation sur le corps (**2**) du véhicule (**1**) autour d'un axe (**A**) de rotation, le deuxième bras (**9**) est fixé sur le corps (**2**), et dans lequel au moins un des premier dispositif (**6**) et deuxième dispositif (**8**) est déporté par rapport à l'axe (**A**) de rotation du premier bras (**7**), le couple (**5**) de bras porteurs comprenant un module (**10**) creux de montage en rotation du premier bras (**7**) sur le corps (**2**), le module (**10**) de montage comprenant une ouverture (**11**) à travers laquelle l'axe (**A**) de rotation et le deuxième bras (**9**) porteur passent, le véhicule (**1**) étant **caractérisé en ce qu'**il comprend des moyens pour commander une rotation héliosynchrone du premier bras (**7**) autour de l'axe (**A**) de rotation, le premier dispositif (**6**) étant apte à être interposé entre le Soleil (**S**) et le deuxième dispositif (**8**) tout au long de l'orbite du véhicule (**1**), de sorte que le deuxième dispositif (**8**) est au moins partiellement à l'ombre du premier dispositif (**6**) tout au long de l'orbite du véhicule (**1**).

2. Véhicule (**1**) selon la revendication 1, dans lequel le premier dispositif (**6**) comprend un panneau (**23**) solaire présentant une face (**24**) frontale apte à recevoir les rayons (**R**) du Soleil (**S**) tournée à l'opposé du deuxième dispositif (**8**) et qui est munie de cellules solaires, le module (**10**) annulaire de montage comprenant des moyens (**27**) pour établir une liaison électrique avec le corps.

3. Véhicule (**1**) selon la revendication 1 ou la revendication 2, dans lequel le premier dispositif (**6**) comprend un panneau (**32**) bloquant les rayons (**R**) du Soleil (**S**), le panneau (**32**) bloquant étant revêtu d'une couche d'un matériau bloquant les rayons (**R**) du Soleil (**S**).

4. Véhicule (**1**) selon l'une quelconque des revendications précédentes, dans lequel le deuxième dispositif (**8**) comprend un radiateur (**25**), le deuxième bras (**9**) étant muni de moyens (**27'**) pour établir un transfert de chaleur entre le radiateur (**25**) et des équipements du véhicule (**1**).

5. Véhicule (**1**) selon la revendication 4, dans lequel les moyens (**27'**) pour établir un transfert de chaleur entre le radiateur et le corps comprennent une liaison fluidique pour la circulation d'un fluide caloporteur.

6. Véhicule (**1**) selon la revendication 4 ou la revendication 5, dans lequel le radiateur (**25**) se présente sous la forme d'un panneau présentant deux faces (**26**) radiatives opposées et comprend une pluralité de caloducs (**37**) répartis sur les faces (**26**) radiatives.

7. Véhicule (**1**) selon l'une quelconque des revendications précédentes, dans lequel le deuxième dispositif (**8**) comprend une antenne (**31**), le premier dispositif étant transparent aux ondes dont la longueur d'onde correspondant à une des longueurs d'émission et / ou de réception de l'antenne (**31**).

8. Véhicule (**1**) selon l'une quelconque des revendications précédentes, dans lequel le deuxième dispositif (**8**) comprend une tuyère (**28**) pour un moteur par exemple de type à plasma.

9. Véhicule (**1**) selon l'une quelconque des revendications précédentes, dans lequel le deuxième bras (**9**) comprend au moins une portion (**33**) flexible autour de toute direction perpendiculaire à l'axe (**A**) de rotation du premier bras, le premier dispositif (**6**) étant aligné sur l'axe (**A**) de rotation.

10. Véhicule (**1**) selon l'une des revendications 1 à 8, dans lequel le deuxième bras (**9**) est rigide, le deuxième dispositif (**8**) étant aligné sur l'axe (**A**) de rotation.

11. Véhicule (**1**) selon l'une des revendications 1 à 10, dans lequel le corps (**2**) présente au moins une face (**18**) dite de support, et dans lequel le premier bras (**7**) et le deuxième bras (**9**) sont articulés en rotation par rapport au corps (**2**) selon un axe d'articulation perpendiculaire à l'axe (**A**) rotation du premier bras (**7**), chaque bras (**7**, **9**) pouvant prendre deux positions extrêmes par rapport à la face (**18**) de support :

    - une position déployée, dans laquelle le bras considéré (**7**, **9**) est en saillie sur ladite face (**18**) de support,
    - une position repliée, dans laquelle le bras (**7**, **9**) considéré est ramené sensiblement parallèlement à la face (**18**) de support.

12. Véhicule (**1**) selon la revendication 11, dans lequel les deux bras (**7**, **9**) en position repliée sont superposés l'un sur l'autre.

13. Véhicule (**1**) selon l'une des revendications 11 ou 12, dans lequel le deuxième bras (**9**) peut prendre une position intermédiaire dans laquelle il forme un angle prédéterminé avec la face support.

14. Véhicule (**1**) selon l'une quelconque des revendications précédentes, comprenant deux couples (**5a**, **5b**) de bras porteurs, les premiers bras (**7**) de chacun des couples (**5a**, **5b**) étant montés en rotation sur le corps (**2**) autour du même axe (**A**) de rotation, un premier couple (**5a**) étant monté sur une première face (**18a**) de support du corps (**2**) et le deuxième couple (**5b**) étant monté sur une deuxième face (**18b**) de support du corps (**2**), la première face (**18a**) de support et la deuxième face (**18b**) de support étant opposées l'une à l'autre selon l'axe (**A**) de rotation des premiers bras (**7**).

15. Procédé pour la mise en oeuvre d'un véhicule (**1**) autour d'une planète (**P**) selon l'une quelconque des revendications précédentes, comprenant les opérations suivantes :

    - la mise en orbite géostationnaire du véhicule (**1**) autour de la planète (**P**) ;
    - la mise en une position initiale du premier dispositif (**6**) par rapport au deuxième dispositif (**8**) dans laquelle le premier dispositif (**6**) reçoit les rayons (**R**) du Soleil (**S**), le deuxième dispositif (**8**) étant au moins partiellement à l'ombre du premier dispositif (**6**) ;
    - la mise en oeuvre des moyens pour commander une rotation héliosynchrone du premier bras (**7**), le deuxième dispositif (**8**) demeurant à l'ombre du premier dispositif tout au long de l'orbite autour de la planète (**P**).

**Patentansprüche**

1. Raumfahrzeug (**1**), wie beispielsweise ein Satellit, das in die Umlaufbahn um einen Planeten (**P**) gebracht werden kann, umfassend einen Körper (**2**), zumindest ein Paar (**5**) von Armen, die als Tragarme bezeichnet werden, eine erste Vorrichtung (**6**), die auf einem ersten Tragarm (**7**) angebracht ist, und eine zweite Vorrichtung (**8**), die auf einem zweiten Tragarm (**9**) angebracht ist, wobei bei dem Fahrzeug (**1**) der erste Arm (**7**) auf dem Körper (**2**) des Fahrzeugs (**1**) um eine Drehachse (**A**) drehbar angebracht ist, der zweite Arm (**9**) auf dem Körper (**2**) befestigt ist und zumindest eine der ersten Vorrichtung (6) und der zweiten Vorrichtung (8) in Bezug auf die Drehachse (A) des ersten Arms (7) versetzt ist, wobei das Paar (5) von Tragarmen ein hohles Modul (10) zur drehbaren Montage des ersten Arms (7) auf dem Körper (2) umfasst, wobei das Montagemodul (10) eine Öffnung (11) umfasst, durch welche die Drehachse (A) und der zweite Tragarm (9) verlaufen, wobei das Fahrzeug (1) **dadurch gekennzeichnet ist, dass** es Mittel zum Steuern einer sonnensynchronen Drehung des ersten Arms (7) um die Drehachse (A) umfasst, wobei die erste Vorrichtung (6) über die ganze Umlaufbahn des Fahrzeugs (1) so zwischen die Sonne (S) und die zweite Vorrichtung (8) gesetzt werden kann, dass die zweite Vorrichtung (8) über die ganze Umlaufbahn des Fahrzeugs (1) zumindest teilweise im Schatten der ersten Vorrichtung (6) ist.

2. Fahrzeug (1) nach Anspruch 1, wobei die erste Vorrichtung (6) ein Solarpaneel (23) umfasst, das eine Vorderfläche (24) aufweist, die die Strahlen (R) der Sonne (S) empfangen kann und von der zweiten Vorrichtung (8) abgewandt ist, und mit Solarzellen versehen ist, wobei das ringförmige Montagemodul (10) Mittel (27) zum Herstellen einer elektrischen Verbindung mit dem Körper umfasst.

3. Fahrzeug (1) nach Anspruch 1 oder 2, wobei die erste Vorrichtung (6) eine die Strahlen (R) der Sonne (S) blockierende Platte (32) umfasst, wobei die blockierende Platte (32) mit einer Schicht aus einem Material überzogen ist, das die Strahlen (R) der Sonne (S) blockiert.

4. Fahrzeug (1) nach einem der vorangehenden Ansprüche, wobei die zweite Vorrichtung (8) einen Radiator (25) umfasst, wobei der zweite Arm (9) mit Mitteln (27') zum Herstellen einer Wärmeübertragung zwischen dem Radiator (25) und der Ausstattung des Fahrzeugs (1) versehen ist.

5. Fahrzeug (1) nach Anspruch 4, wobei die Mittel (27') zum Herstellen einer Wärmeübertragung zwischen dem Radiator und dem Körper eine strömungstechnische Verbindung für die Zirkulation eines Wärmeträgerfluids umfassen.

6. Fahrzeug (1) nach Anspruch 4 oder 5, wobei der Radiator (25) in Form einer Platte vorliegt, die zwei gegenüberliegende Strahlungsflächen (26) aufweist, und eine Mehrzahl von auf den Strahlungsflächen (26) verteilten Wärmerohren (37) umfasst.

7. Fahrzeug (1) nach einem der vorangehenden Ansprüche, wobei die zweite Vorrichtung (8) eine Antenne (31) umfasst, wobei die erste Vorrichtung für Wellen durchlässig ist, deren Wellenlänge einer der Sendewellenlänge und/oder Empfangswellenlänge der Antenne (31) entspricht.

8. Fahrzeug (1) nach einem der vorangehenden Ansprüche, wobei die zweite Vorrichtung (8) eine Düse (28) für ein Triebwerk umfasst, das beispielsweise als Plasmatriebwerk ausgeführt ist.

9. Fahrzeug (1) nach einem der vorangehenden Ansprüche, wobei der zweite Arm (9) zumindest einen Abschnitt (33) umfasst, der um jede Richtung senkrecht zur Drehachse (A) des ersten Arms flexibel ist, wobei die erste Vorrichtung (6) mit der Drehachse (A) ausgerichtet ist.

10. Fahrzeug (1) nach einem der Ansprüche 1 bis 8, wobei der zweite Arm (9) starr ist, wobei die zweite Vorrichtung (8) mit der Drehachse (A) ausgerichtet ist.

11. Fahrzeug (1) nach einem der Ansprüche 1 bis 10, wobei der Körper (2) zumindest eine Fläche (18) aufweist, die als Stützfläche bezeichnet wird, und der erste Arm (7) und der zweite Arm (9) in Bezug auf den Körper (2) um eine Gelenkachse senkrecht zur Drehachse (A) des ersten Arms (7) drehbar angelenkt sind, wobei jeder Arm (7, 9) zwei Endpositionen in Bezug auf die Stützfläche (18) einnehmen kann:

    - eine ausgeklappte Position, in der der jeweilige Arm (7, 9) auf der Stützfläche (18) vorsteht,
    - eine eingeklappte Position, in der der jeweilige Arm (7, 9) im Wesentlichen parallel zu der Stützfläche (18) eingefahren ist.

12. Fahrzeug (1) nach Anspruch 11, wobei die zwei Arme (7, 9) in der eingeklappten Position aufeinanderliegen.

13. Fahrzeug (1) nach einem der Ansprüche 11 oder 12, wobei der zweite Arm (9) eine Zwischenposition einnehmen kann, in der er mit der Stützfläche einen vorbestimmten Winkel bildet.

**14.** Fahrzeug (**1**) nach einem der vorangehenden Ansprüche, umfassend zwei Paare (**5a, 5b**) von Tragarmen, wobei die jeweils ersten Arme (**7**) der Paare (**5a, 5b**) auf dem Körper (**2**) um dieselbe Drehachse (**A**) drehbar angebracht sind, wobei ein erstes Paar (**5a**) auf einer ersten Stützfläche (**18a**) des Körpers (**2**) angebracht ist und das zweite Paar (**5b**) auf einer zweiten Stützfläche (**18b**) des Körpers (**2**) angebracht ist, wobei die erste Stützfläche (**18a**) und die zweite Stützfläche (**18b**) einander gemäß der Drehachse (**A**) der ersten Arme (**7**) gegenüberliegen.

**15.** Verfahren zur Inbetriebsetzung eines Fahrzeugs (**1**) nach einem der vorangehenden Ansprüche um einen Planeten (P), das die folgenden Schritte umfasst:

- Bringen des Fahrzeugs (**1**) in die geostationäre Umlaufbahn um den Planeten (**P**);
- Bringen der ersten Vorrichtung (**6**) in eine Ausgangsposition in Bezug auf die zweite Vorrichtung (**8**), in der die erste Vorrichtung (**6**) die Strahlen (**R**) der Sonne (**S**) empfängt, wobei die zweite Vorrichtung (**8**) zumindest teilweise im Schatten der ersten Vorrichtung (**6**) ist;
- Inbetriebsetzen von Mitteln zum Steuern einer sonnensynchronen Drehung des ersten Arms (**7**), wobei die zweite Vorrichtung (**8**) über die ganze Umlaufbahn um den Planeten (**P**) im Schatten der ersten Vorrichtung bleibt.

## Claims

**1.** Space craft (**1**), such as a satellite, capable of being put into orbit around a planet (**P**), comprising a body (**2**), at least one pair (**5**) of arms called supporting arms, a first device (**6**) mounted on a first supporting arm (**7**) and a second device (**8**) mounted on a second supporting arm (**9**), a craft (**1**) in which the first arm (**7**) is rotatably mounted on the body (**2**) of the craft (**1**) about an axis of rotation (**A**), the second arm (**9**) is fixed to the body (**2**), and in which at least one of the first device (**6**) and second device (**8**) is offset with respect to the axis of rotation (A) of the first arm (**7**), the pair (**5**) of supporting arms comprising a hollow module (**10**) for rotatably mounting the first arm (**7**) on the body (**2**), the mounting module (**10**) comprising an opening (**11**) through which the axis of rotation (A) and the second supporting arm (**9**) pass, the craft (**1**) being **characterized in that** it comprises means for controlling a sun-synchronous rotation of the first arm (**7**) about the axis of rotation (**A**), the first device (**6**) being capable of being interposed between the sun (**S**) and the second device (**8**) throughout the orbit of the craft (**1**), so that the second device (**8**) is at least partially in the shadow of the first device (**6**) throughout the orbit of the craft (**1**).

**2.** Craft (**1**) according to claim 1, in which the first device (**6**) comprises a solar panel (**23**) having a front face (**24**) capable of receiving the rays (**R**) of the sun (**S**) turned away from the second device (**8**) and which is provided with solar cells, the annular mounting module (**10**) comprising means (**27**) for establishing an electrical connection with the body.

**3.** Craft (**1**) according to claim 1 or claim 2, in which the first device (**6**) comprises a panel (**32**) blocking the rays (**R**) of the sun (**S**), the blocking panel (**32**) being coated with a layer of a material blocking the rays (**R**) of the sun (**S**).

**4.** Craft (**1**) according to any one of the preceding claims, in which the second device (**8**) comprises a radiator (**25**), the second arm (**9**) being equipped with means (**27'**) for establishing a heat transfer between the radiator (**25**) and equipment of the craft (**1**).

**5.** Craft (**1**) according to claim 4, in which the means (**27'**) for establishing a heat transfer between the radiator and the body comprises a fluid connection for the circulation of a heat-carrying fluid.

**6.** Craft (**1**) according to claim 4 or claim 5, in which the radiator (**25**) is in the form of a panel with two opposite radiative faces (**26**) and comprises a plurality of heat pipes (**37**) distributed over the radiative faces (**26**).

**7.** Craft (**1**) according to any one of the preceding claims, in which the second device (**8**) comprises an antenna (**31**), the first device being transparent to waves with wavelengths corresponding to one of the emission and/or reception wavelengths of the antenna (**31**).

**8.** Craft (**1**) according to any one of the preceding claims, in which the second device (**8**) comprises a nozzle (**28**) for a motor for example of the plasma thruster type.

**9.** Craft (**1**) according to any one of the preceding claims, in which the second arm (**9**) comprises at least one portion (**33**) flexible about any direction perpendicular to the axis of rotation (A) of the first arm, the first device (**6**) being aligned on the axis of rotation (A).

10. Craft (**1**) according to one of claims 1 to 8, in which the second arm (**9**) is rigid, the second device (**8**) being aligned on the axis of rotation (**A**).

11. Craft (**1**) according to one of claims 1 to 10, in which the body (**2**) has at least one face (**18**) called the support face, and in which the first arm (**7**) and the second arm (**9**) are rotatably articulated with respect to the body (**2**) about an axis of articulation perpendicular to the axis of rotation (**A**) of the first arm (**7**), each arm (**7**, **9**) being able to assume two extreme positions with respect to the support face (**18**):

   - a deployed position, in which the arm considered (**7**, **9**) projects from said support face (**18**),
   - a stowed position, in which the arm (**7**, **9**) considered is brought substantially parallel to the support face (**18**).

12. Craft (**1**) according to claim 11, in which the two arms (**7**, **9**) in the stowed position are superimposed on one another.

13. Craft (**1**) according to one of claims 11 or 12, in which the second arm (**9**) can assume an intermediate position in which it forms a predetermined angle with the support face.

14. Craft (**1**) according to any one of the preceding claims, comprising two pairs (**5a**, **5b**) of supporting arms, the first arm (**7**) of each of the pairs (**5a**, **5b**) being rotatably mounted on the body (**2**) about the same axis of rotation (**A**), a first pair (**5a**) being mounted on a first support face (**18a**) of the body (**2**) and the second pair (**5b**) being mounted on a second support face (**18b**) of the body (**2**), the first support face (**18a**) and the second support face (**18b**) being opposite one another along the axis of rotation (**A**) of the first arm (**7**).

15. Method for the utilization of a craft (**1**) around a planet (**P**) according to any one of the preceding claims, comprising the following operations:

   - putting the craft (**1**) into geostationary orbit around the planet (**P**);
   - putting the first device (**6**) into an initial position in relation to the second device (**8**) in which the first device (**6**) receives the rays (**R**) of the sun (**S**), the second device (**8**) being at least partially in the shadow of the first device (**6**);
   - utilizing the means for controlling a sun-synchronous rotation of the first arm (**7**), the second device (**8**) remaining in the shadow of the first device throughout the orbit around the planet (**P**).

FIG. 1

**FIG. 2a**

EP 3 003 860 B1

**FIG. 2b**

EP 3 003 860 B1

FIG. 3

FIG. 4

FIG. 5

FIG. 6

06:00

EP 3 003 860 B1

**FIG. 7**

FIG. 8

FIG. 9a

FIG. 9b

FIG. 9c

FIG. 9d

FIG. 10

FIG. 11a

FIG. 11b

FIG. 11c

FIG. 11d

**FIG. 12**

EP 3 003 860 B1

FIG. 13

EP 3 003 860 B1

FIG. 14

EP 3 003 860 B1

FIG. 15

FIG. 16

EP 3 003 860 B1

FIG. 17

FIG. 18

EP 3 003 860 B1

FIG. 19

FIG. 20

FIG. 21a

FIG. 21b

FIG. 21c

FIG. 21d

FIG. 21e

**FIG. 22a**

**FIG. 22b**

**FIG. 22c**

**FIG. 22d**

FIG. 23a

FIG. 23b

FIG. 23c

FIG. 23d

**FIG. 24**

**FIG. 25**

EP 3 003 860 B1

**EP 3 003 860 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6102339 A, WU
- FR 2823182
- US 5833175 A
- WO 03059740 A
- US 3817477 A